# EUROPEAN PATENT APPLICATION

(11) **EP 4 087 182 A1**
(43) Date of publication of application: **09.11.2022**
(21) Application number: 20915052.3
(22) Date of filing: 23.12.2020
(51) Int. Cl.: H04L 9/10, G06F 21/73

(54) **REGISTRATION DEVICE, VERIFICATION DEVICE, IDENTIFICATION DEVICE, AND INDIVIDUAL IDENTIFICATION SYSTEM**

(30) Priority: 23.01.2020 JP 2020009468
(71) Applicant: Tokyo University of Science Foundation, Tokyo 162-8601 (JP); Nagase & Co., Ltd., Osaka 550-8668 (JP)
(72) Inventor: IWAMURA, Keiichi, Tokyo 162-8601 (JP); KANEDA, Kitahiro, Tokyo 103-8355 (JP)
(74) Representative: Isarpatent
(86) International application number: PCT/JP2020/048166
(87) International publication number: WO 2021/149449

(57) **Abstract**

A registration device of an individual identification system that includes the registration device, a verification device, and an identification device and that identifies an individual identification target, the registration device including: a registration unit that outputs verification information enabling verification of an identification key that is unique to the identification target, by using, as inputs, an input signal that depends on at least one of a physical property and an image feature of the identification target, and non-physical information that does not depend on the physical property and that differs for each identification target.

## Description

### Technical Field

The present disclosure relates to a registration device, a verification device, an identification device, and an individual identification system.

### Background Art

Conventionally, as a technique for discriminating between an authentic device and a counterfeit device for devices such as semiconductor chips, an individual identification system utilizing a property that it is difficult to reproduce (a physically unclonable function (PUF)) unique to the device has been proposed (see Japanese Patent Application Laid-Open No. 2015-154291).

In addition, a determination device has been proposed that verifies the legitimacy of a set consisting of device information and a signature by using device information unique to a determination target device, a signature for the device information, and a verification key corresponding to a generation key with which the signature is generated, and that determines the legitimacy of the determination target device on the basis of the verified legitimacy (see republished Japanese Patent No. 2016 -207944).

In addition, a verification system that verifies the legitimacy of an article, which is to be subjected to authenticity determination, on the basis of a feature amount extracted from the article has been disclosed (see Japanese Patent Application Laid-Open No. 2010 -81039).

### Summary of Invention

### Technical Problem

Although an individual device to be determined can be identified using individual identification utilizing a PUF, it is not possible to verify whether or not the device to be determined satisfies the specifications desired by the user. In addition, even in the case of technology that uses device information unique to the determination target device, it is not possible to verify whether or not the determination target device satisfies the specifications desired by the user.

However, in the case of technology that verifies the legitimacy of an article to be determined by using a feature amount extracted from the article, when the feature amount is predicted, it is possible to counterfeit an article having the same feature amount or a device that outputs the same feature amount. In this case, the legitimacy of the article cannot be correctly verified.

The present disclosure was conceived in view of the foregoing situation, and an object thereof is to provide a registration device, a verification device, an identification device, and an individual identification system that are capable of verifying whether or not an identification target is a legitimate article that satisfies specifications, and of identifying an individual identification target.

### Solution to Problem

The disclosed technology is, as one aspect, a registration device of an individual identification system that includes the registration device and a verification device, and that identifies an individual identification target, the registration device including: a registration unit that outputs verification information enabling verification of an identification key that is unique to the identification target, by using, as inputs, an input signal that depends on at least one of a physical property and an image feature of the identification target, and non-physical information that does not depend on the physical property and that differs for each identification target.

### Advantageous Effects of Invention

According to the present disclosure, it is possible to verify whether or not an identification target is a legitimate article that satisfies specifications, and to identify an individual identification target.

### Brief Description of Drawings

[Fig. 1] Fig. 1 is a block diagram illustrating an example of a configuration of an individual identification system according to each embodiment.
[Fig. 2] Fig. 2 is a block diagram illustrating an example of a hardware configuration of a registration device according to first, second, fifth, and sixth embodiments.
[Fig. 3] Fig. 3 is a block diagram illustrating an example of a hardware configuration of a verification device according to the first, second, fifth, and sixth embodiments.
[Fig. 4] Fig. 4 is a block diagram illustrating an example of a hardware configuration of an identification device according to each embodiment.
[Fig. 5] Fig. 5 is a block diagram illustrating an example of functional configurations of a registration device, a verification device, and an identification device according to the first embodiment.
[Fig. 6] Fig. 6 is a flowchart illustrating an example of registration processing according to the first, fifth, and sixth embodiments.
[Fig. 7] Fig. 7 is a flowchart illustrating an example of generation processing according to the first and second embodiments.
[Fig. 8] Fig. 8 is a flowchart illustrating an example of identification processing according to the first to third embodiments.
[Fig. 9] Fig. 9 is a flowchart illustrating an example of identification processing in a case in which re-verification according to the first embodiment is performed.
[Fig. 10] Fig. 10 is a block diagram illustrating an example of functional configurations of a registration device, a verification device, and an identification device according to a second embodiment.
[Fig. 11] Fig. 11 is a flowchart illustrating an example of registration processing according to the second embodiment.
[Fig. 12] Fig. 12 is a block diagram illustrating an example of a hardware configuration of the registration device according to a third embodiment.
[Fig. 13] Fig. 13 is a block diagram illustrating an example of a hardware configuration of the verification device according to the third embodiment.
[Fig. 14] Fig. 14 is a block diagram illustrating an example of functional configurations of a registration device, a verification device, and an identification device according to the third embodiment.
[Fig. 15] Fig. 15 is a flowchart illustrating an example of registration processing according to the third embodiment.
[Fig. 16] Fig. 16 is a flowchart illustrating an example of generation processing according to the third embodiment.
[Fig. 17] Fig. 17 is a block diagram illustrating an example of a hardware configuration of the registration device according to a fourth embodiment.
[Fig. 18] Fig. 18 is a block diagram illustrating an example of a hardware configuration of the verification device according to the fourth embodiment.
[Fig. 19] Fig. 19 is a block diagram illustrating an example of functional configurations of a registration device, a verification device, and an identification device according to the fourth embodiment.
[Fig. 20] Fig. 20 is a flowchart illustrating an example of registration processing according to the fourth embodiment.
[Fig. 21] Fig. 21 is a flowchart illustrating an example of generation processing according to the fourth embodiment.
[Fig. 22] Fig. 22 is a flowchart illustrating an example of identification processing according to the fourth embodiment.
[Fig. 23] Fig. 23 is a diagram for describing individual identification using PUF technology.
[Fig. 24] Fig. 24 is a block diagram illustrating an example of functional configurations of a registration device, a verification device, and an identification device according to a fifth embodiment.
[Fig. 25] Fig. 25 is a flowchart illustrating an example of output processing according to the fifth embodiment.
[Fig. 26] Fig. 26 is a flowchart illustrating an example of identification processing according to the fifth embodiment.
[Fig. 27] Fig. 27 is a block diagram illustrating an example of functional configurations of a registration device, a verification device, and an identification device according to a sixth embodiment.
[Fig. 28] Fig. 28 is a flowchart illustrating an example of output processing according to the sixth embodiment.
[Fig. 29] Fig. 29 is a flowchart illustrating an example of identification processing according to the sixth embodiment.
[Fig. 30] Fig. 30 is a block diagram illustrating an example of functional configurations of a registration device and a verification device according to a modification example.

### Description of Embodiments

Hereinafter, exemplary embodiments for carrying out the technology according to the present disclosure will be described in detail with reference to the drawings.

First, before describing the details of the embodiment, problems with PUF technology will be described.

Generally, PUF-based individual identification is used to detect device counterfeiting for devices, such as semiconductor devices, for which PUF technology is established. In particular, this form of identification is often used to verify that a device dispatched by a sender and a device purchased by a purchaser and delivered by the delivery party to the purchaser are identical.

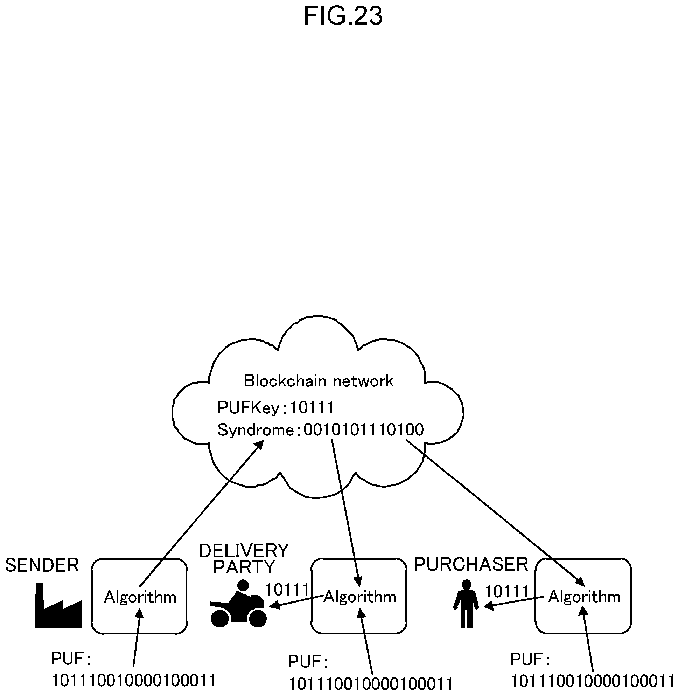

Specifically, as illustrated in Fig. 23 as an example, the sender registers a value related to the PUF of the device to be shipped as the PUFKey in a storage device with which falsification is difficult such as a blockchain. The purchaser acquires the PUF value of the device received from the delivery party, and verifies the legitimacy of the PUF value using the published PUFKey, thereby verifying that the received device is the same as the device shipped by the sender, that is, is not a counterfeit. For example, in a case in which the delivery party replaces the device with another device during delivery and delivers a counterfeit device to the purchaser, the PUF value of the device received by the purchaser will be different from the PUF value of the device dispatched by the sender. Therefore, in this case, the purchaser is able to ascertain that the received device is not the correct device.

In general, however, it is not important to the purchaser that the shipped article and the received article are completely identical, and it is often important to the purchaser that the article is not counterfeit, that is, that same is a legitimate article meeting the required specifications. Specifically, for example, in the case of diamond, when a purchaser purchases a diamond selected after viewing a sample, the diamond sent from the sender need not be the sample diamond itself, and often there is no problem for the purchaser as long as the diamond has the same number of carats, hardness, size, and the like.

In the following embodiments, an individual identification system will be described that is capable of verifying whether or not a substance and a device for which PUF technology has not been established are legitimate articles that satisfy the required specifications, and of performing individual identification similar to when PUF technology is employed.

### [First Embodiment]

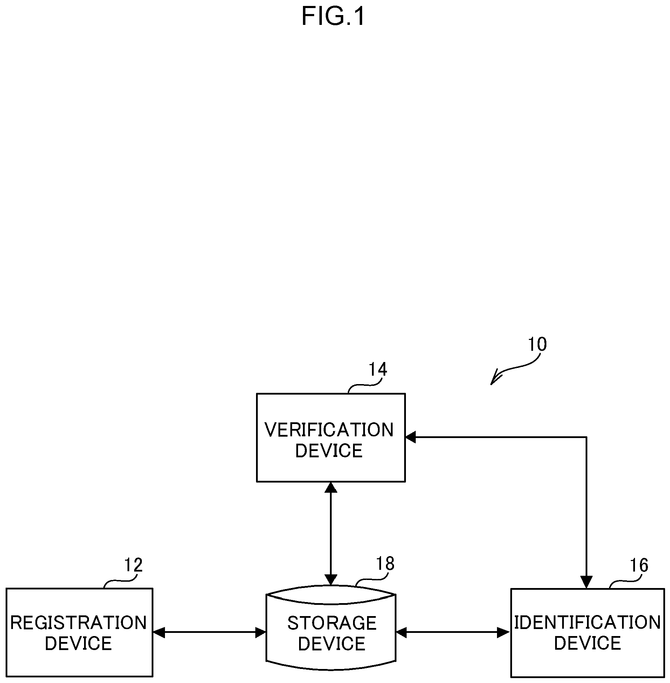

First, a configuration of an individual identification system 10 according to the present embodiment will be described with reference to Fig. 1. The individual identification system 10 is a system that identifies an individual identification target, and, as illustrated in Fig. 1, includes a registration device 12, a verification device 14, an identification device 16, and a storage device 18. The registration device 12, the verification device 14, and the identification device 16, are capable of communicating with the storage device 18 via a network. The verification device 14 and the identification device 16 are also capable of communicating via a network. Note that, in the present embodiment, an example in which diamond is applied as an identification target will be described.

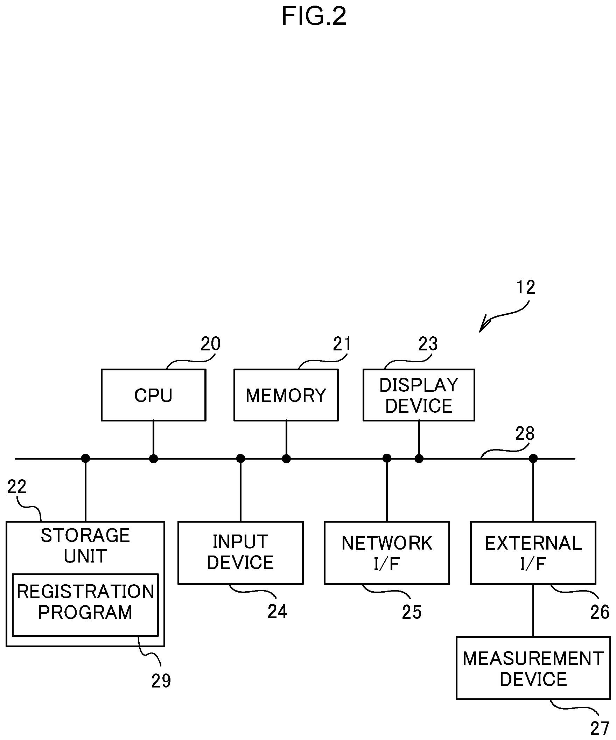

Next, a hardware configuration of the registration device 12 according to the present embodiment will be described with reference to Fig. 2. As illustrated in Fig. 2, the registration device 12 includes a central processing unit (CPU) 20, a memory 21 serving as a temporary storage area, and a nonvolatile storage unit 22. The registration device 12 includes a display device 23 such as a liquid-crystal display, an input device 24 such as a keyboard and a mouse, a network I/F (Interface) 25 connected to the network, and an external I/F 26. The CPU 20, the memory 21, the storage unit 22, the display device 23, the input device 24, the network I/F 25, and the external I/F 26 are connected to a bus 28.

The storage unit 22 is realized by a hard disk drive (HDD), a solid state drive (SSD), a flash memory, or the like. The storage unit 22 serving as a storage medium stores a registration program 29. After reading the registration program 29 from the storage unit 22, the CPU 20 deploys this program in the memory 21 and executes the deployed registration program 29.

A measurement device 27 for measuring a physical quantity that depends on a physical property of an identification target is connected to the external I/F 26. In the present embodiment, an example will be described in which a device for measuring the weight of the identification target is applied as the measurement device 27. The measurement device 27 outputs a signal representing a measurement result obtained by measuring the identification target, to the CPU 20 via the external I/F 26.

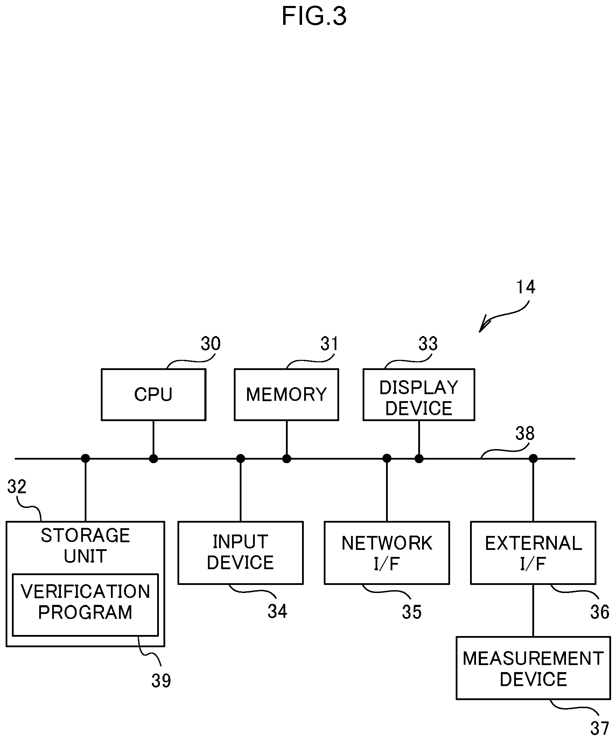

Next, a hardware configuration of the verification device 14 according to the present embodiment will be described with reference to Fig. 3. As illustrated in Fig. 3, the verification device 14 includes a CPU 30, a memory 31 serving as a temporary storage area, and a nonvolatile storage unit 32. The verification device 14 includes a display device 33 such as a liquid-crystal display, an input device 34 such as a keyboard and a mouse, a network I/F 35 connected to the network, and an external I/F 36. The CPU 30, the memory 31, the storage unit 32, the display device 33, the input device 34, the network I/F 35, and the external I/F 36 are connected to a bus 38.

The storage unit 32 is realized by an HDD, an SSD, a flash memory, or the like. A verification program 39 is stored in the storage unit 32 serving as a storage medium. After reading the verification program 39 from the storage unit 32, the CPU 30 deploys this program in the memory 31 and executes the deployed verification program 39.

Similarly to the measurement device 27, a measurement device 37 for measuring a physical quantity that depends on the physical property of the identification target is connected to the external I/F 36. In the present embodiment, an example will be described in which a device for measuring the weight of an identification target is applied as the measurement device 37. The measurement device 37 outputs a signal representing a measurement result obtained by measuring the identification target, to the CPU 30 via the external I/F 36.

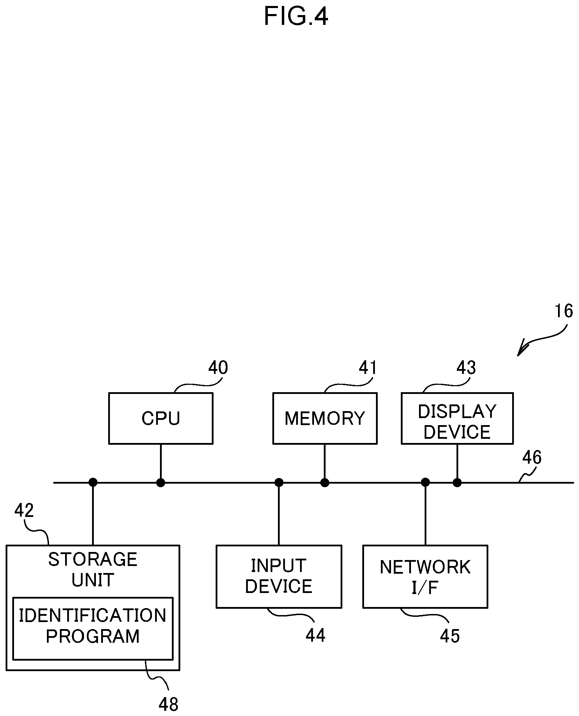

Next, a hardware configuration of the identification device 16 according to the present embodiment will be described with reference to Fig. 4. As illustrated in Fig. 4, the identification device 16 includes a CPU 40, a memory 41 serving as a temporary storage area, and a nonvolatile storage unit 42. The identification device 16 includes a display device 43 such as a liquid-crystal display, an input device 44 such as a keyboard and a mouse, and a network I/F 45 connected to the network. The CPU 40, the memory 41, the storage unit 42, the display device 43, the input device 44, and the network I/F 45 are connected to a bus 46.

The storage unit 42 is realized by an HDD, an SSD, a flash memory, or the like. The storage unit 42 serving as a storage medium stores an identification program 48. After reading the identification program 48 from the storage unit 42, the CPU 40 deploys this program in the memory 41 and executes the deployed identification program 48.

The storage device 18 has a nonvolatile storage area. In the present embodiment, an example will be described in which a write-once storage device with which it is difficult to falsify stored data is applied as the storage device 18. An example of the storage device 18 includes a blockchain. Note that the storage device 18 may be a storage device that is provided to any one of the registration device 12, verification device 14, and identification device 16. In addition, the storage device 18 may be a combination of storage devices provided to two or more among the registration device 12, verification device 14, and identification device 16. Furthermore, the storage device 18 may be a combination of storage devices capable of communicating via a network with the registration device 12, verification device 14, and identification device 16, and storage devices that are provided to one or more of the registration device 12, verification device 14, and identification device 16.

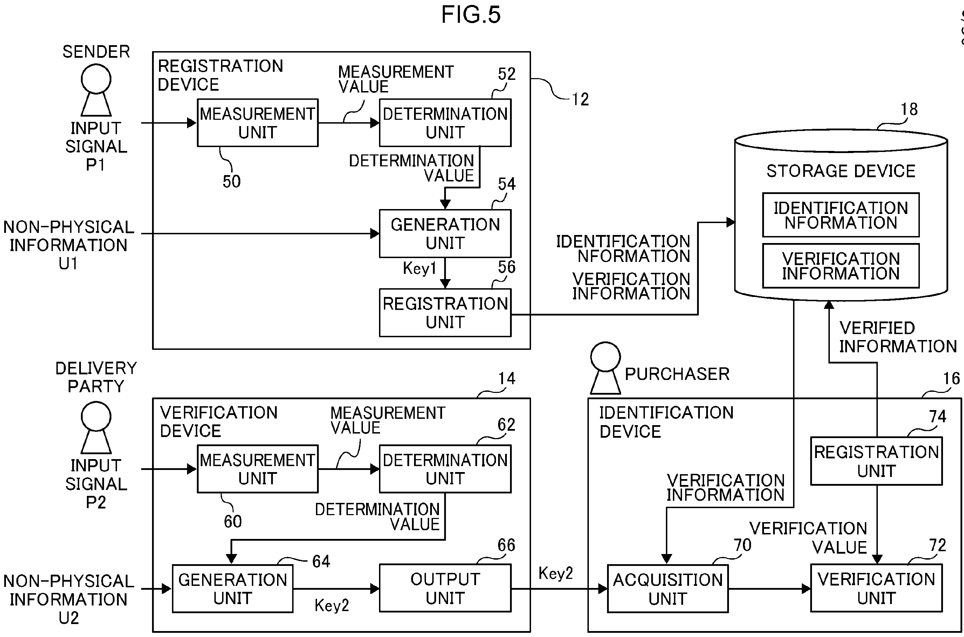

Next, functional configurations of the registration device 12, the verification device 14, and the identification device 16 according to the present embodiment will be described with reference to Fig. 5. The registration device 12 is carried by, for example, a sender who is sending an identification target. The verification device 14 is carried by, for example, a delivery party delivering the identification target sent by the sender to a purchaser. The identification device 16 is carried by, for example, the purchaser who has purchased the identification target from the sender.

As illustrated in Fig. 5, the registration device 12 includes a measurement unit 50, a determination unit 52, a generation unit 54, and a registration unit 56. By executing the registration program 29, the CPU 20 functions as the measurement unit 50, the determination unit 52, the generation unit 54, and the registration unit 56.

The measurement unit 50 measures the physical property of the identification target from an input signal P1 inputted from the measurement device 27. As described earlier, the input signal P1 is a signal representing a physical quantity that depends on the physical property of the identification target. Specifically, for example, the measurement unit 50 measures the number of carats of diamond from the input signal P1 indicating the weight of the diamond to be identified, as measured by the measurement device 27. Note that the number of input signals P1 may be plural. For example, in addition to the weight of the diamond, a signal indicating the dimensions of the outer shape of the diamond, a signal indicating the hardness of the diamond, and the like, may be inputted from the measurement device 27 to the registration device 12.

The determination unit 52 determines whether the measurement result by the measurement unit 50 is legitimate. In the present embodiment, the determination unit 52 determines whether or not the measurement result by the measurement unit 50 is legitimate by determining whether or not the measurement value constituting the measurement result by the measurement unit 50 is within a range that has been preset as a legitimate value range. Specifically, for example, when the number of carats of the diamond to be identified is one carat, the determination unit 52 determines that the measurement result is legitimate when the measurement result by the measurement unit 50 is within an error of 1% from one carat, that is, from 0.99 carat to 1.01 carat. In this case, the determination unit 52 determines that the measurement result is not legitimate when the measurement result by the measurement unit 50 is less than 0.99 carat or more than 1.01 carat. Accordingly, the determination unit 52 is capable of determining the authenticity of an identification target.

In the present embodiment, the determination result by the determination unit 52 is two values, namely, a value indicating that the identification target is legitimate and a value indicating that the identification target is not legitimate. In the case of PUF technology, for example, a signal is used which has a fine individual difference such as the delay time from when a signal is inputted to the identification target device to when the signal is outputted. Therefore, a noise removal technology called a fuzzy extractor or the like is required for this signal. However, in the present embodiment, due to the determination result by the determination unit 52 being represented by two values, complicated processing such as noise removal as required for PUF technology becomes unnecessary.

Furthermore, for example, by assigning a bit string having a relatively large number of bits such as a 128-bit bit string to the determination result by the determination unit 52, it is possible to suppress counterfeiting of the determination result.

Note that the determination result by the determination unit 52 is not two values indicating whether or not the measurement result by the measurement unit 50 is legitimate, but may be, for example, three or more values indicating a level at which the measurement result by the measurement unit 50 satisfies legitimacy.

The generation unit 54 generates an identification key Key1 that is unique to the identification target from the determination result by the determination unit 52 and from the non-physical information U1 that does not depend on the physical property of the identification target and differs for each identification target. In the present embodiment, the generation unit 54 generates, as the identification key Key1, a hash value of a value obtained by combining the determination result by the determination unit 52 with the non-physical information U1. The non-physical information U1 according to the present embodiment is, for example, information including the manufacturer of an identification target, a serial number, a lot number, a transaction ID, various transaction information, a random number, the number of verifications, and the like, and is information that enables an individual identification target to be specified. Note that the generation unit 54 may generate, as the identification key Key1, a hash value of the exclusive OR from the determination result by the determination unit 52 and the non-physical information U1, and only needs to be able to generate a random number subjected to processing such as encryption from the determination result by the determination unit 52 and the non-physical information U1. The generation unit 54 may generate the identification key Key1 from the determination result by the determination unit 52 and a portion of the non-physical information U1 (for example, a set consisting of the manufacturer and the serial number). The serial number may be a combination of a lot number and a branch number of a product.

The registration unit 56 generates verification information enabling verification of the identification key Key1 from the identification key Key1 generated by the generation unit 54. In the present embodiment, the registration unit 56 generates, as the verification information, the hash value of the identification key Key1 generated by the generation unit 54. The verification information may be encrypted data of the identification key Key1, and may be generated by processing having unidirectionality in which the identification key Key1 cannot be specified from the verification information. Furthermore, the functional parts that generate the hash values of the registration device 12, the verification device 14, and the identification device 16, other than the registration unit 56, are similarly not limited to hash functions, and may also use unidirectional functions including encryption or the like. The registration unit 56 then outputs the generated verification information and the identification information for specifying the verification information of the identification target, to the storage device 18 via the network I/F 25. As a result, the registration unit 56 registers the verification information and the identification information in the storage device 18. The storage device 18 holds the verification information and the identification information in association with each other. As the identification information, a portion of the non-physical information U1 (for example, a set consisting of the manufacturer and the serial number) can be applied.

As illustrated in Fig. 5, the verification device 14 includes a measurement unit 60, a determination unit 62, a generation unit 64, and an output unit 66. By executing the verification program 39, the CPU 30 functions as the measurement unit 60, the determination unit 62, the generation unit 64, and the output unit 66.

Similarly to the measurement unit 50, the measurement unit 60 measures the physical property of the identification target from an input signal P2 inputted from the measurement device 37. As described earlier, the input signal P2 is a signal representing a physical quantity that depends on the physical property of the identification target. Similarly to the determination unit 52, the determination unit 62 determines whether the measurement result by the measurement unit 60 is legitimate.

Similarly to the generation unit 54, the generation unit 64 generates an identification key Key2 that is unique to the identification target from the determination result by the determination unit 62 and from the non-physical information U2 that does not depend on the physical property of the identification target and that differs for each identification target. Similarly to the non-physical information U1, the non-physical information U2 is information including, for example, a manufacturer of an identification target, a serial number, a random number, the number of verifications, and the like, and is information enabling an individual identification target to be specified. For example, when the purchaser purchases the identification target, the non-physical information U2 is reported from the sender to the purchaser. Note that the sender may tag the identification target onto the non-physical information U2. In this case, the purchaser is able to ascertain the non-physical information U2 from the tag attached to the identification target.

When receiving the identification target from the delivery party, the purchaser inputs the non-physical information U2 to the verification device 14 held by the delivery party, via the input device 34.

The output unit 66 outputs the identification key Key2 generated by the generation unit 64 to the identification device 16 via the network I/F 35.

As illustrated in Fig. 5, the identification device 16 includes an acquisition unit 70, a verification unit 72, and a registration unit 74. By executing the identification program 48, the CPU 40 functions as the acquisition unit 70, the verification unit 72, and the registration unit 74.

The acquisition unit 70 acquires the identification key Key2 outputted from the verification device 14. The acquisition unit 70 also acquires, from the storage device 18, the verification information corresponding to the identification information of the identification target. In the present embodiment, the identification information of the identification target can be extracted from the non-physical information U2 of the identification target, which is reported beforehand by the sender to the purchaser.

The verification unit 72 verifies the legitimacy of the identification key Key2 by using the verification information acquired by the acquisition unit 70, and the identification key Key2. Specifically, the verification unit 72 calculates the hash value of the identification key Key2 and compares the calculation result with the verification information. When the calculated hash value of the identification key Key2 matches the verification information, the verification unit 72 outputs success information indicating that the legitimacy of the identification key Key2 has been successfully verified, to the registration unit 74. However, when the calculated hash value of the identification key Key2 does not match the verification information, the verification unit 72 outputs failure information indicating that the verification of the legitimacy of the identification key Key2 has failed, to the registration unit 74.

When the verification unit 72 succeeds in verifying the legitimacy of the identification key Key2, the registration unit 74 registers verified information indicating that the verification information registered in the storage device 18 has been verified, in the storage device 18 in association with the verification information. Furthermore, the registration unit 74 outputs information indicating the verification result by the verification unit 72 to the display device 43. The purchaser is able to ascertain whether or not the identification target delivered by the delivery party is legitimate by visually recognizing the verification result displayed on the display device 43.

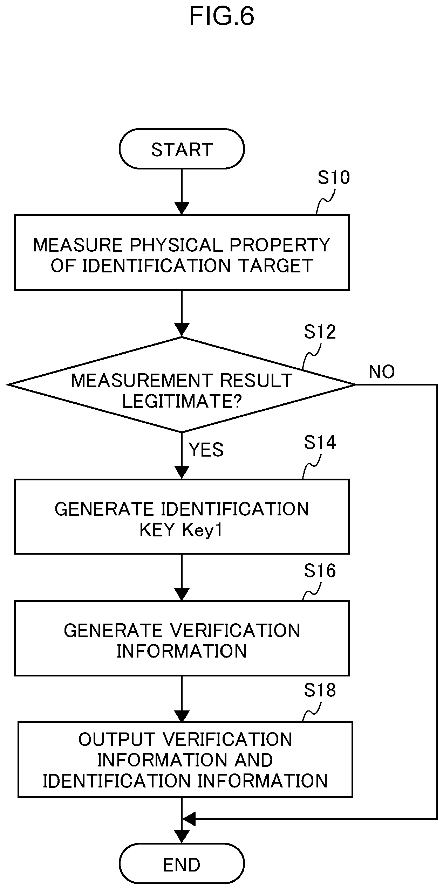

Next, the operation of the individual identification system 10 according to the present embodiment will be described with reference to Figs. 6 to 8. First, registration processing, in which the registration device 12 registers verification information will be described with reference to Fig. 6. By executing the registration program 29, the CPU 20 of the registration device 12 executes the registration processing illustrated in Fig. 6. The registration processing is executed, for example, when an execution instruction is inputted by the sender via the input device 24.

In step S10 of Fig. 6, the measurement unit 50 measures the physical property of the identification target from the input signal P1 inputted from the measurement device 27, as described earlier. In step S12, as described earlier, the determination unit 52 determines whether the measurement result by the processing of step S10 is legitimate. When this determination is an affirmative determination, the processing moves to step S14.

In step S 14, as described earlier, the generation unit 54 generates the identification key Key1 that is unique to the identification target from the determination result in step S12 and from the non-physical information U1 that does not depend on the physical property of the identification target and that differs for each identification target.

In step S16, as described earlier, the registration unit 56 generates verification information that enables verification of the identification key Key1 from the identification key Key1 generated in step S14. In step S18, as described earlier, the registration unit 56 outputs the verification information generated in step S16 and the identification information of the identification target to the storage device 18 via the network I/F 25. When the processing of step S18 is complete, the registration processing ends. When the determination of step S12 is a negative determination, the processing from step S14 to step S18 is not executed, and the registration processing ends.

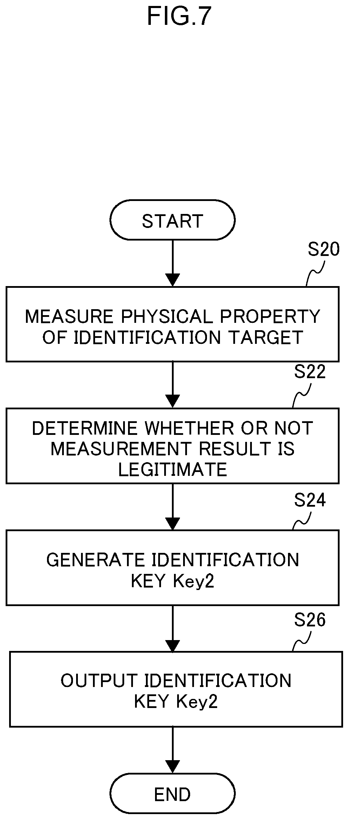

Next, generation processing in which the verification device 14 generates the identification key Key2 will be described with reference to Fig. 7. By executing the verification program 39, the CPU 30 of the verification device 14 executes the generation processing illustrated in Fig. 7. The generation processing is executed, for example, when an execution instruction is inputted by the purchaser or the delivery party via the input device 34.

In step S20 of Fig. 7, as described earlier, the measurement unit 60 measures the physical property of the identification target from the input signal P2 inputted from the measurement device 37. In step S22, as described earlier, the determination unit 62 determines whether the measurement result by the processing of step S20 is legitimate.

In step S24, as described earlier, the generation unit 64 generates the identification key Key2 that is unique to the identification target from the determination result by the processing of step S22 and the non-physical information U2 that does not depend on the physical property of the identification target and that differs for each identification target. In step S26, the output unit 66 outputs the identification key Key2 generated in step S24 to the identification device 16 via the network I/F 35. When the processing of step S26 is complete, the registration processing ends.

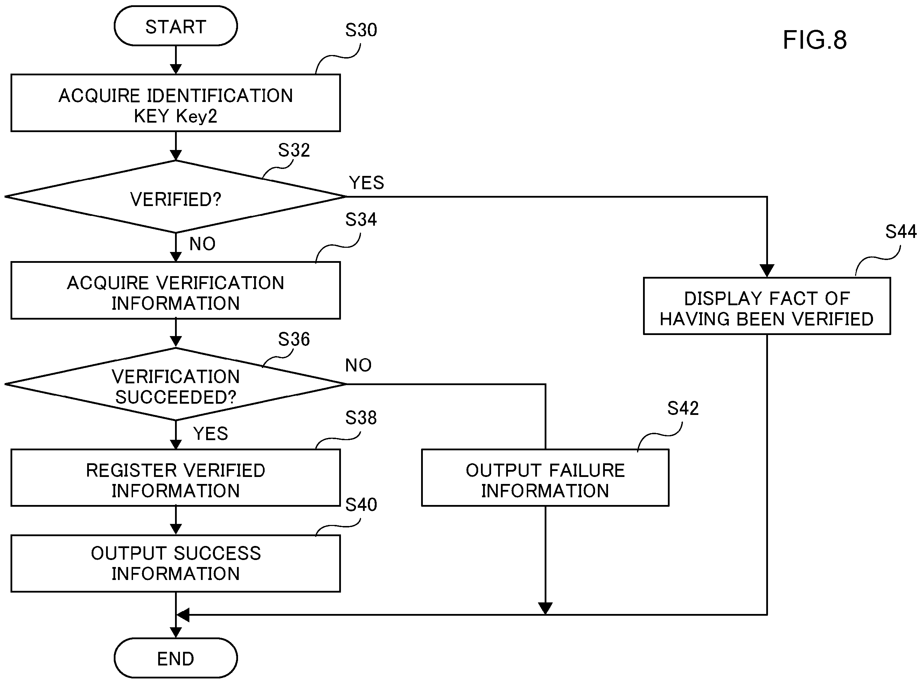

Next, identification processing in which the identification device 16 identifies an identification target will be described with reference to Fig. 8. By executing the identification program 48, the CPU 40 of the identification device 16 executes the identification processing illustrated in Fig. 8. The identification processing is executed, for example, when the identification device 16 receives the identification key Key2 outputted from the verification device 14 by the processing of step S26 of the foregoing generation processing.

In step S30 of Fig. 8, the acquisition unit 70 acquires the identification key Key2 outputted from the verification device 14. In step S32, the acquisition unit 70 determines whether the verified information is associated, in the storage device 18, with the verification information corresponding to the identification information of the identification target. When this determination is an affirmative determination, the processing moves to step S44, and when the determination is negative, the processing moves to step S34.

In step S34, the acquisition unit 70 acquires the verification information corresponding to the identification information of the identification target from the storage device 18. In step S36, as described earlier, the verification unit 72 determines whether or not the legitimacy of the identification key Key2 has been successfully verified by determining whether or not the hash value of the identification key Key2 acquired in step S30 matches the verification information acquired in step S34. When this determination is a negative determination, the processing moves to step S42, and in the case of an affirmative determination, the processing moves to step S38.

In step S38, the registration unit 74 registers verified information indicating that the verification information registered in the storage device 18 has been verified, in the storage device 18 in association with the verification information. In step S40, the registration unit 74 outputs, to the display device 43, information indicating that the legitimacy of the identification key Key2 has been successfully verified. The purchaser is able to ascertain that the identification target is correct by visually recognizing the information displayed on the display device 43. When the processing of step S40 is complete, the identification processing ends.

However, in step S42, the registration unit 74 outputs, to the display device 43, information indicating that the verification of the legitimacy of the identification key Key2 has failed. The purchaser is able to ascertain that the identification target is counterfeit by visually recognizing the information displayed on the display device 43. When the processing of step S42 is complete, the identification processing ends. In step S44, the registration unit 74 outputs, to the display device 43, information indicating that the identification target has already been verified, thereby displaying the information on the display device 43. When the processing of step S44 is complete, the identification processing ends.

As described earlier, according to the present embodiment, it is possible to verify whether or not an identification target is a legitimate article that satisfies specifications, and to identify an individual identification target.

For example, a case will be considered in which the delivery party replaces an authentic identification target with an identification target that is counterfeit and for which the measurement result by the measurement unit 60 of the verification device 14 is not included in a range that is preset as a legitimate value range (does not satisfy specifications). In this case, the determination unit 62 of the verification device 14 outputs a determination value that differs from the determination value outputted from the determination unit 52 of the registration device 12. Therefore, the hash value of the identification key Key2 generated by the generation unit 64 of the verification device 14 does not match the verification information generated from the identification key Key1 stored in the storage device 18. Therefore, the purchaser is able to ascertain that the received identification target is a counterfeit.

Furthermore, for example, a case is considered in which an attacker other than the sender and the delivery party sends an identification target that is a counterfeit identification target and for which the measurement result by the measurement unit 60 of the verification device 14 is included in a range that has been preset as a legitimate value range. In this case, since the attacker cannot know the non-physical information U1, the attacker cannot generate the correct identification key Key1. In this case, the verification information generated from the identification key Key1 does not match the hash value of the identification key Key2 generated by the generation unit 64 of the verification device 14. Therefore, the purchaser is able to ascertain that the received identification target is a counterfeit. Moreover, even when the attacker colludes with the delivery party, if the sender notifies the purchaser of the non-physical information U1 in a manner that the delivery party and the attacker are not aware of this information, the attacker is similarly unable to generate the correct identification key Key1. Therefore, the purchaser is able to ascertain that the received identification target is a counterfeit.

In the present embodiment, in order to make it possible to distinguish even when a plurality of verification information items that correspond to a plurality of identification targets are stored in the storage device 18, the identification information is stored in the storage device 18 in association with the verification information items. Furthermore, in the present embodiment, when the verification of the identification target is successful, the verified information is stored in the storage device 18 in association with the verification information. These information items are not used in the case of a PUF. Therefore, in the case of a PUF, if the delivery party counterfeits the verification device 14 so as to cause the verification device 14 to store the identification key Key2 that has been successfully verified and such that this key is outputted from the verification device 14, it is considered that verification of the identification target always succeeds because there is no verified information.

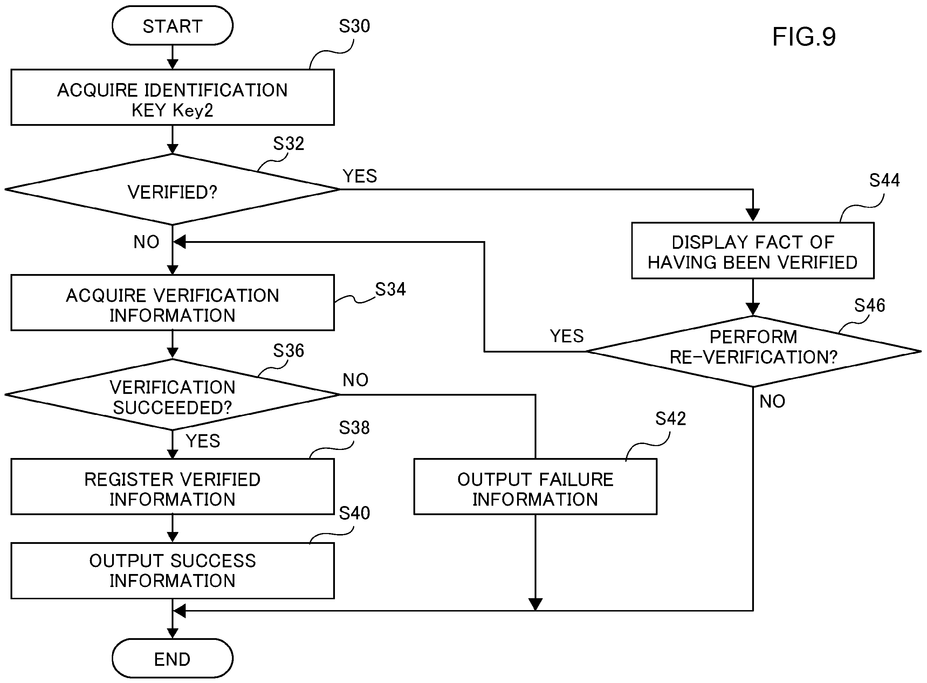

In contrast, in the present embodiment, in a case in which verified information is added, the identification target is not verified. However, in a case in which the re-verification is performed, as illustrated in Fig. 9 as an example, the verification unit 72 confirms whether or not to perform the re-verification in step S46 after step S44. When the verification unit 72 succeeds in confirming the intention of re-verification, the processing moves to step S34, and in the event of failure, the identification processing ends. In addition, in a case in which re-verification is performed using new non-physical information, the purchaser may contact the sender and generate new non-physical information items U1 and U2, which are obtained by adding 1 to the number of verifications. As a result, even if the storage device 18 is a write-once storage device capable of only additional writing such as a blockchain, re-verification can be performed using the previous non-physical information or the updated non-physical information items U1 and U2. In a case in which the previous non-physical information is used, it is confirmed that the information has been verified, and hence there is no problem.

Note that, in the present embodiment, in order to make it difficult to analyze and change the measurement result by the measurement unit 60 and the determination result by the determination unit 62, the measurement unit 60, the determination unit 62, the generation unit 64, and the output unit 66 of the verification device 14 may be realized by an integrated circuit (IC) chip that is tamper-resistant.

### [Second Embodiment]

A second embodiment of the disclosed technology will be described. Note that the configuration of the individual identification system 10 (see Fig. 1) and the hardware configurations of the registration device 12, the verification device 14, and the identification device 16 (see Figs. 2 to 4) are the same as those of the first embodiment, and hence a description thereof is omitted.

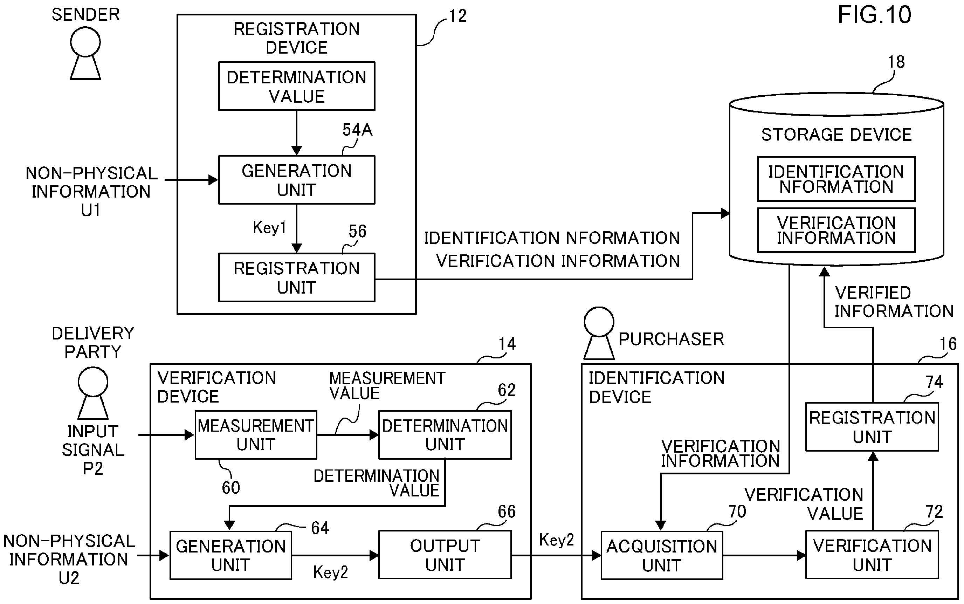

A functional configuration of the registration device 12 according to the present embodiment will be described with reference to Fig. 10. Note that the functional configurations of the verification device 14 and the identification device 16 are the same as those of the first embodiment, and hence a description thereof is omitted. Functional units having the same functions as those of the first embodiment are assigned the same reference signs, and a description thereof is omitted.

As illustrated in Fig. 10, the registration device 12 includes a generation unit 54A and a registration unit 56. By executing the registration program 29, the CPU 20 functions as the generation unit 54A and the registration unit 56. In addition, the storage unit 22 of the registration device 12 stores a determination value that is preset by the sender and that indicates that the physical property of the identification target is legitimate. Similarly to the determination result by the determination unit 52 according to the first embodiment, for example, a bit string having a relatively large number of bits such as a 128-bit bit string is allocated to the determination value. In general, it is considered that the physical properties of the identification target sent from the sender are guaranteed to be legitimate. Therefore, the registration device 12 can omit determination of the legitimacy of the physical properties of the identification target. Unlike a PUF, since the determination value pertaining to an authentic identification target is fixed, the measurement unit 50 and the determination unit 52 according to the first embodiment can be omitted, and as a result, the registration device 12 can be simplified.

The generation unit 54A generates the identification key Key1 from the determination value stored in the storage unit 22 and the non-physical information U1. In the present embodiment, the generation unit 54A generates the identification key Key1 from a hash value, or the like, of a value obtained by combining the determination value and the non-physical information U1.

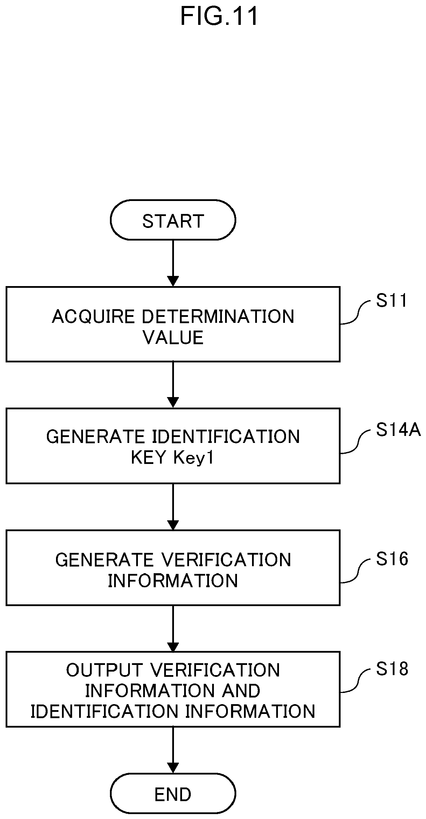

Next, the operation of the individual identification system 10 according to the present embodiment will be described with reference to Fig. 11. Note that the generation processing (see Fig. 7) executed by the verification device 14 and the identification processing (see Fig. 8) executed by the identification device 16 are the same as those of the first embodiment, and hence a description thereof is omitted.

A registration processing in which the registration device 12 registers verification information will be described with reference to Fig. 11. By executing the registration program 29, the CPU 20 of the registration device 12 executes the registration processing illustrated in Fig. 11. The registration processing is executed, for example, when an execution instruction is inputted by the sender via the input device 24. Note that steps in Fig. 11 in which the same processing as that in Fig. 6 is executed are assigned the same step numbers, and hence a description thereof is omitted.

In Fig. 11, step S11 is executed instead of step S10 and step S12 in Fig. 6, and step S14A is executed instead of step S14. In step S11 of Fig. 11, the generation unit 54A acquires the determination value stored in the storage unit 22. In step S14A, as described earlier, the generation unit 54A generates the identification key Key1 from the determination value acquired in step S11 and the non-physical information U1.

As described earlier, according to the present embodiment, the same advantageous effects as those of the first embodiment can be obtained.

For example, in a case in which the sender intentionally or erroneously stores an incorrect determination value in the storage unit 22, if the verification device 14 is legitimate, the identification key Key1 and the identification key Key2 are not the same. In this case, since the identification device 16 fails to verify the identification target, the purchaser is able to ascertain that the determination value is incorrect. Even in a case in which a sender sends an identification target whose physical property is not legitimate (does not satisfy the specifications) intentionally or by mistake even though a determination value indicating that the physical property of the identification target is legitimate is stored in the storage unit 22, the identification key Key1 and the identification key Key2 are not the same. Here too, since the identification device 16 fails to verify the identification target, the purchaser is able to ascertain that the determination value is incorrect.

### [Third Embodiment]

A third embodiment of the disclosed technology will be described. Note that the configuration of the individual identification system 10 (see Fig. 1) and the hardware configuration of the identification device 16 (see Fig. 4) are the same as those of the first embodiment, and hence a description thereof is omitted.

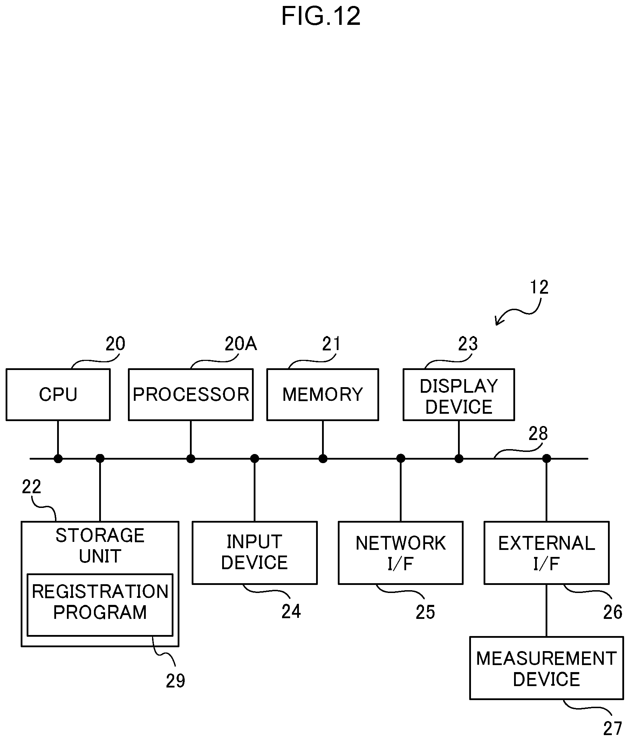

A hardware configuration of the registration device 12 according to the present embodiment will be described with reference to Fig. 12. Note that the same components as those of the first embodiment are assigned the same reference signs, and hence a description thereof is omitted.

As illustrated in Fig. 12, the registration device 12 further includes a processor 20A. The processor 20A is connected to the bus 28. The processor 20A is a different type of hardware processor from the CPU 20, and is configured to include a programmable integrated circuit. Examples of the processor 20A include a field-programmable gate array (FPGA), a programmable logic device (PLD), and the like.

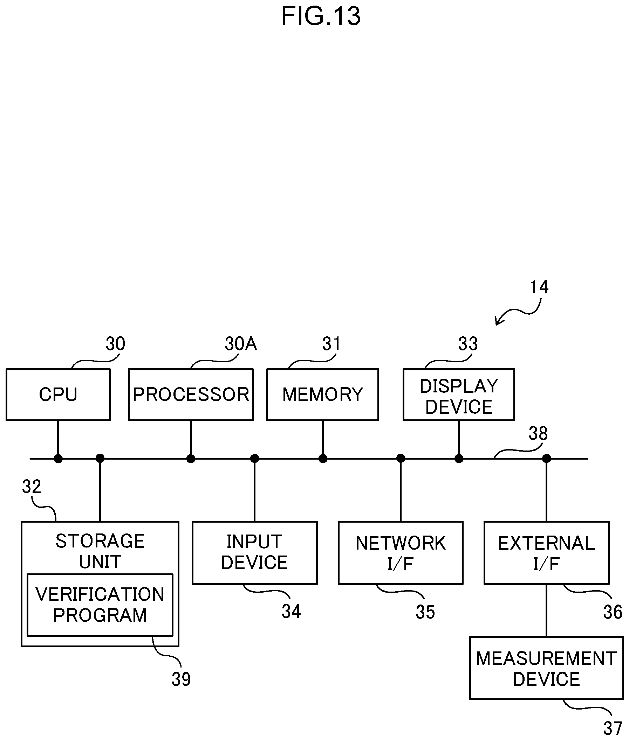

A hardware configuration of the verification device 14 according to the present embodiment will be described with reference to Fig. 13. Note that the same components as those of the first embodiment are assigned the same reference signs, and hence a description thereof is omitted.

As illustrated in Fig. 13, the verification device 14 further includes a processor 30A. The processor 30A is connected to the bus 38. The processor 30A is a different type of hardware processor from the CPU 30, and is configured to include a programmable integrated circuit. Examples of the processor 30A include an FPGA, a PLD, and the like.

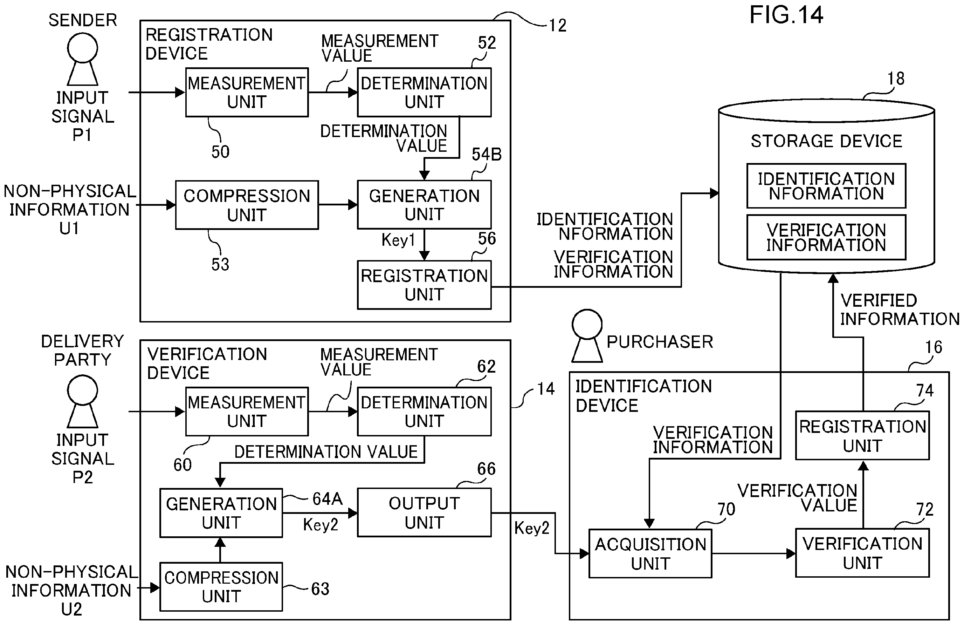

Next, functional configurations of the registration device 12 and the verification device 14 according to the present embodiment will be described with reference to Fig. 14. Note that the functional configuration of the identification device 16 is the same as that of the first embodiment, and hence a description thereof is omitted. Functional units having the same functions as those of the first embodiment are assigned the same reference signs, and a description thereof is omitted.

As illustrated in Fig. 14, the registration device 12 includes a measurement unit 50, a determination unit 52, a compression unit 53, a generation unit 54B, and a registration unit 56. By executing the registration program 29, the CPU 20 functions as the compression unit 53. The processor 20A functions as the measurement unit 50, the determination unit 52, the generation unit 54B, and the registration unit 56 by being driven according to pre-programmed logic.

The compression unit 53 compresses the non-physical information U1. Specifically, the compression unit 53 calculates a random number having unidirectionality with a smaller number of bits than the non-physical information U1, such as a hash value of the non-physical information U1. This calculation result is the compressed non-physical information U1. Through this compression, a different random number is generated for each non-physical information item U1.

The generation unit 54B generates the identification key Key1 by means of a function having unidirectionality such as encryption, using a predetermined key, of the determination result by the determination unit 52 and the non-physical information U1 compressed by the compression unit 53. In the present embodiment, the generation unit 54B encrypts a value obtained by combining the determination result by the determination unit 52 and the compressed non-physical information U1 according to a predetermined encryption algorithm such as AES (Advanced Encryption Standard). The identification key Key1 is generated by this encryption.

As illustrated in Fig. 14, the verification device 14 includes a measurement unit 60, a determination unit 62, a compression unit 63, a generation unit 64A, and an output unit 66. By executing the verification program 39, the CPU 30 functions as the compression unit 63. The processor 30A functions as the measurement unit 60, the determination unit 62, the generation unit 64A, and the output unit 66 by being driven according to pre-programmed logic.

The compression unit 63 compresses the non-physical information U2 similarly to the compression unit 53. Similarly to the generation unit 54B, the generation unit 64A generates the identification key Key2 by using a predetermined key to encrypt the determination result by the determination unit 62 and the non-physical information U2 compressed by the compression unit 63. The registration device 12 and the verification device 14 pre-store a common key that is used for encryption by the generation unit 54B and the generation unit 64A.

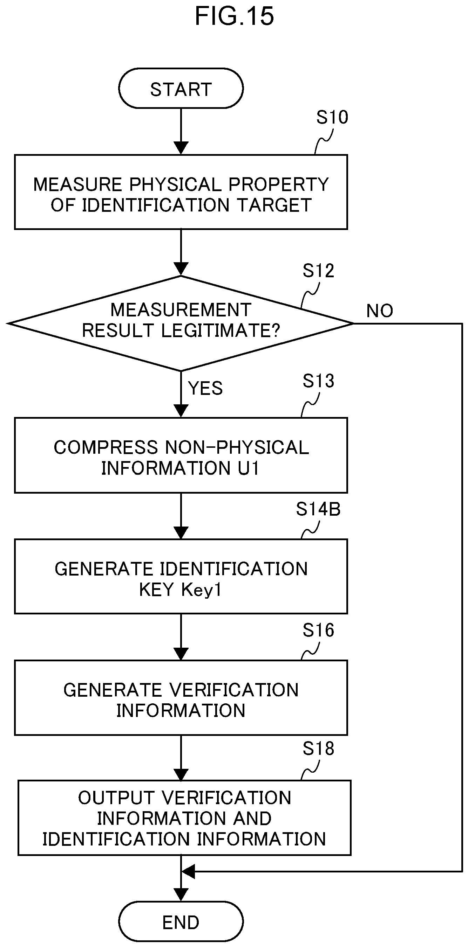

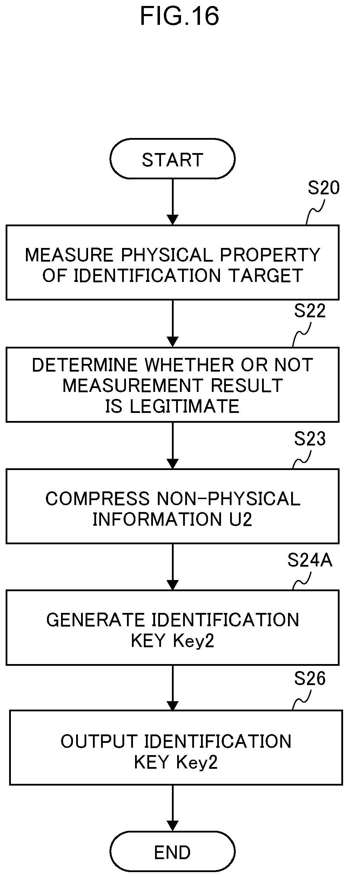

Next, the operation of the individual identification system 10 according to the present embodiment will be described with reference to Figs. 15 and 16. Note that the identification processing (see Fig. 8) executed by the identification device 16 is the same as that of the first embodiment, and hence a description thereof is omitted.

First, registration processing in which the registration device 12 registers verification information will be described with reference to Fig. 15. By executing the registration program 29, the CPU 20 of the registration device 12 executes the registration processing illustrated in Fig. 15. The registration processing is executed, for example, when an execution instruction is inputted by the sender via the input device 24. Note that the steps in Fig. 15 in which the same processing as that of Fig. 6 is executed are assigned the same step numbers, and hence a description thereof is omitted.

In Fig. 15, when the determination of step S12 is an affirmative determination, the processing moves to step S13. In Fig. 15, step S14B is executed instead of step S14 in Fig. 6. In step S13 of Fig. 15, the compression unit 53 compresses the non-physical information U1 as described earlier. In step S14B, as described earlier, the generation unit 54B generates the identification key Key1 by using a predetermined key to encrypt the determination result in step S12 and the non-physical information U1 compressed in step S13.

Next, generation processing in which the verification device 14 generates the identification key Key2 will be described with reference to Fig. 16. The generation processing is executed, for example, when an execution instruction is inputted by the purchaser or the delivery party via the input device 34. Note that the steps in Fig. 16 in which the same processing as that of Fig. 7 is executed are assigned the same step numbers, and hence a description thereof is omitted.

In Fig. 16, step S24Ais executed instead of step S24 in Fig. 7, and step S23 is executed between step S22 and step S24A. In step S23 of Fig. 16, the compression unit 63 compresses the non-physical information U2. In step S24A, the generation unit 64A generates the identification key Key2 by using a predetermined key to encrypt the determination result by the processing of step S22 and the non-physical information U2 compressed in step S23.

As described earlier, according to the present embodiment, the same advantageous effects as those of the first embodiment can be obtained.

In the present embodiment, it is difficult to counterfeit the verification device 14 because the identification key Key1 and the identification key Key2 are outputted as different random numbers for each individual identification target and for each number of verifications.

Note that, also in the present embodiment, similarly to the second embodiment, a determination value that is preset by the sender and that indicates that the physical property of the identification target is legitimate may also be stored in the storage unit 22 of the registration device 12.

### [Fourth Embodiment]

A fourth embodiment of the disclosed technology will be described. Note that the configuration of the individual identification system 10 (see Fig. 1) and the hardware configuration of the identification device 16 (see Fig. 4) are the same as those of the first embodiment, and hence a description thereof is omitted.

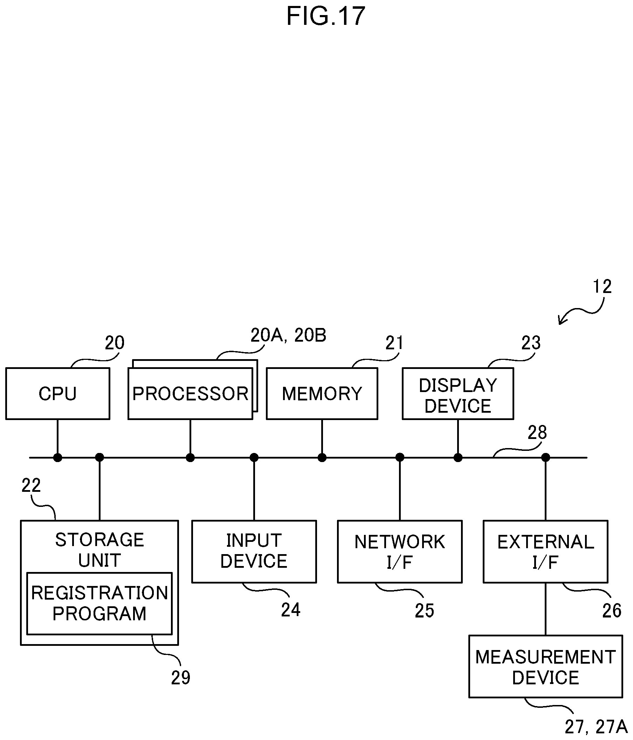

A hardware configuration of the registration device 12 according to the present embodiment will be described with reference to Fig. 17. Note that the same components as those of the third embodiment are assigned the same reference signs, and hence a description thereof is omitted. As illustrated in Fig. 17, the registration device 12 further includes a processor 20B. The processor 20B is connected to the bus 28. The processor 20B is a hardware processor similar to the processor 20A.

A measurement device 27A for measuring a physical quantity that depends on an image feature of an identification target is connected to the external I/F 26. In the present embodiment, an example in which a digital camera is applied as the measurement device 27A will be described. The measurement device 27A outputs a signal (for example, image data) that depends on an image feature of the identification target obtained by photographing the identification target, to the processor 20B via the external I/F 26.

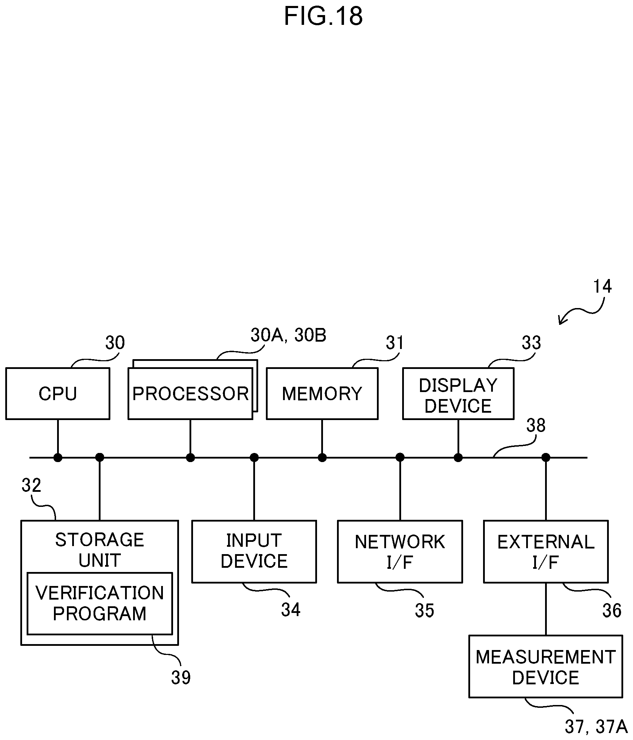

Next, a hardware configuration of the verification device 14 according to the present embodiment will be described with reference to Fig. 18. Note that the same components as those of the third embodiment are assigned the same reference signs, and hence a description thereof is omitted. The verification device 14 further includes a processor 30B. The processor 30B is connected to the bus 38. The processor 30B is a hardware processor similar to the processor 30A.

A measurement device 37A for measuring a physical quantity that depends on an image feature of an identification target is connected to the external I/F 36. In the present embodiment, an example in which a digital camera is applied as the measurement device 37A will be described. The measurement device 37A outputs a signal (for example, image data) that depends on an image feature of the identification target obtained by photographing the identification target, to the processor 30B via the external I/F 36.

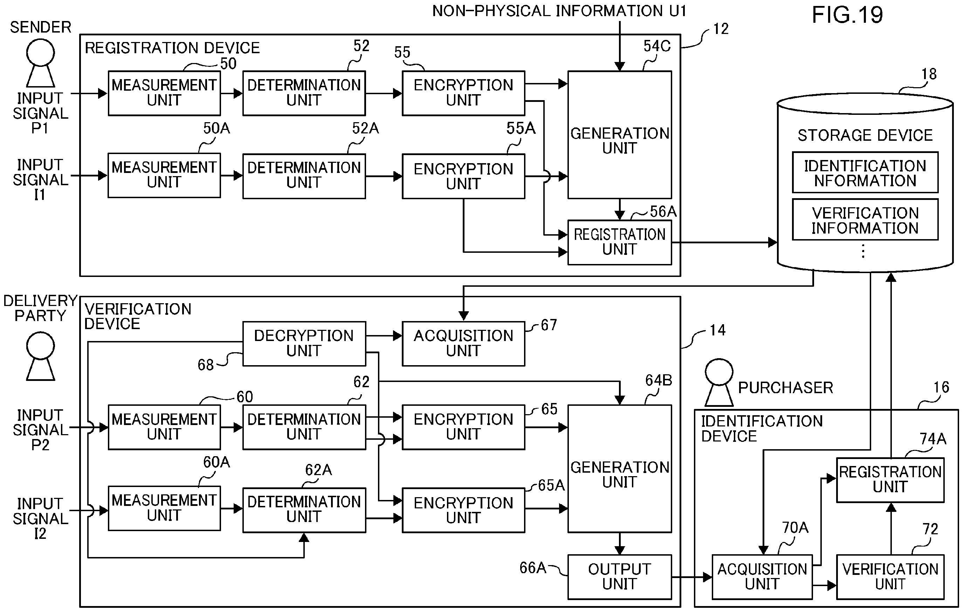

Next, functional configurations of the registration device 12, the verification device 14, and the identification device 16 according to the present embodiment will be described with reference to Fig. 19. Note that functional units having the same functions as those of the first embodiment are assigned the same reference signs, and hence a description thereof is omitted. In the present embodiment, a device-specific device identifier (ID) is respectively assigned to the registration device 12 and the verification device 14. Furthermore, the registration device 12 and the verification device 14 hold a secret key and a public key so that encryption and decryption by a public key encryption method can be performed.

As illustrated in Fig. 19, the registration device 12 includes measurement units 50 and 50A, determination units 52 and 52A, a generation unit 54C, encryption units 55 and 55A, and a registration unit 56A. By executing the registration program 29, the CPU 20 functions as the generation unit 54C and the registration unit 56A. The processor 20A functions as the measurement unit 50, the determination unit 52, and the encryption unit 55 by being driven according to pre-programmed logic. The processor 20B functions as the measurement unit 50A, the determination unit 52A, and the encryption unit 55A by being driven according to pre-programmed logic.

The measurement unit 50A measures an image feature of an identification target from the input signal I1 inputted from the measurement device 27A. Specifically, for example, the measurement unit 50A measures the image feature of the identification target by performing image analysis processing on the image data indicated by the input signal I1. Examples of image features include a diamond shape and outline dimensions (for example, the length of a crown and a pavilion, or the like). Note that a feature added to an identification target such as a signature using a random pattern and characters may also be applied as the image feature.

Similarly to the determination unit 52, the determination unit 52A determines whether the measurement result by the measurement unit 50A is legitimate. In the present embodiment, an image feature of the identification target is preset in the determination unit 52A, which determines whether or not a measurement result by the measurement unit 50A is legitimate by determining whether or not a measurement value constituting the measurement result by the measurement unit 50A is within a range that has been preset as a legitimate value range. This determination is made by comparing a measurement result by the measurement unit 50A and a preset image feature.

The encryption unit 55 generates a session key 1 and encrypts a determination result by the determination unit 52 by using the generated session key 1. Hereinafter, the determination result by the determination unit 52 is referred to as "determination result 1", and the encrypted determination result 1 is referred to as "determination result 1C". Further, the session key 1 is a different key for each verification device 14 constituting a communication destination.

The encryption unit 55 encrypts the non-physical information U1 by using the session key 1. Hereinafter, the encrypted non-physical information U1 is referred to as "non-physical information C". The encryption unit 55 also encrypts the session key 1 by using the public key of the verification device 14. Hereinafter, the encrypted session key 1 is referred to as "session key 1A".

The encryption unit 55A generates a session key 2 that is different from the session key 1, and encrypts the determination result by the determination unit 52A by using the generated session key 2. Hereinafter, the determination result by the determination unit 52A is referred to as "determination result 2", and the encrypted determination result 2 is referred to as "determination result 2C". Further, the session key 2 is a different key for each verification device 14 constituting a communication destination. Note that the session key 1 and the session key 2 may be the same key.

The encryption unit 55A also encrypts the image feature of the identification target that has been set in the determination unit 52Aby using the session key 2. Hereinafter, the encrypted image feature is referred to as "image feature C". The encryption unit 55A also encrypts the session key 2 by using the public key of the verification device 14. Hereinafter, the encrypted session key 2 is referred to as "session key 2A".

The generation unit 54C generates the identification key Key1 that is unique to the identification target from the determination result 1C, the determination result 2C, and the non-physical information U1 that does not depend on the physical property of the identification target and that is different for each identification target. In the present embodiment, the generation unit 54C generates, as the identification key Key1, a hash value of a value obtained by concatenating the determination result 1C, the determination result 2C, and the non-physical information U1.

Similarly to the registration unit 56, the registration unit 56A generates verification information, which enables verification of the identification key Key1, from the identification key Key1 generated by the generation unit 54C. The registration unit 56A also generates a digital signature R (hereinafter referred to as "signature R") for the verification information and the identification information by using the private key of the registration device 12. The signature R is an example of information for authenticating the registration device 12. The registration unit 56A then outputs the verification information, the identification information, the session key 1A, the session key 2A, the non-physical information C, the image feature C, and the signature R to the storage device 18 via the network I/F 25. The storage device 18 verifies the legitimacy of the signature R, and when the signature R is legitimate, holds the verification information, the identification information, the session key 1A, the session key 2A, the non-physical information C, the image feature C, and the signature R. As a result, the registration unit 56A registers the verification information, the identification information, the session key 1A, the session key 2A, the non-physical information C, the image feature C, and the signature R in the storage device 18.

As illustrated in Fig. 19, the verification device 14 includes measurement units 60 and 60A, determination units 62 and 62A, a generation unit 64B, encryption units 65 and 65A, an output unit 66A, an acquisition unit 67, and a decryption unit 68. By executing the verification program 39, the CPU 30 functions as the generation unit 64B, the output unit 66A, the acquisition unit 67, and the decryption unit 68. The processor 30A functions as the measurement unit 60, the determination unit 62, and the encryption unit 65 by being driven according to pre-programmed logic. The processor 30B functions as the measurement unit 60A, the determination unit 62A, and the encryption unit 65A by being driven according to pre-programmed logic.

The acquisition unit 67 acquires the session key 1A, the session key 2A, the non-physical information C, and the image feature C corresponding to the identification information of the identification target, from the storage device 18. The decryption unit 68 decrypts the session key 1A and the session key 2A by using the secret key of the verification device 14. Through this decryption, the session key 1 and the session key 2 are obtained. The decryption unit 68 also decrypts the non-physical information C by using the session key 1. Through this decryption, the non-physical information U1 is obtained. The decryption unit 68 decrypts the image feature C by using the session key 2. Through this decryption, the image feature of the identification target is obtained.

Similarly to the measurement unit 50A, the measurement unit 60A measures the image feature of the identification target from the input signal I2 inputted from the measurement device 37A. Similarly to the determination unit 52A, the determination unit 62A determines whether the measurement result by the measurement unit 60A is legitimate by using the image feature decrypted by the decryption unit 68.

The encryption unit 65 encrypts the determination result by the determination unit 62 by using the session key 1 obtained through the decryption by the decryption unit 68. Hereinafter, the determination result by the determination unit 62 is referred to as "determination result 3", and the encrypted determination result 3 is referred to as "determination result 3C".

The encryption unit 65A encrypts the determination result by the determination unit 62A by using the session key 2 obtained through decryption by the decryption unit 68. Hereinafter, the determination result by the determination unit 62A is referred to as "determination result 4", and the encrypted determination result 4 is referred to as "determination result 4C".

Similarly to the generation unit 54 C, the generation unit 64B generates the identification key Key2, which is unique to the identification target, from the determination result 3C, the determination result 4C, and the non-physical information U1 obtained through decryption by the decryption unit 68. The generation unit 64B also generates confirmation information. This confirmation information is information that includes the generation date and time of the identification key Key2, the device ID of the verification device 14, and the like. The generation unit 64B generates a digital signature V (hereinafter referred to as "signature V") for the confirmation information by using the secret key of the verification device 14. The signature V is an example of information for authenticating the verification device 14.

The output unit 66A outputs the identification key Key2, the confirmation information, and the signature V, which have been generated by the generation unit 64B, to the identification device 16 via the network I/F 35.

As illustrated in Fig. 19, the identification device 16 includes an acquisition unit 70A, a verification unit 72, and a registration unit 74A. By executing the identification program 48, the CPU 40 functions as the acquisition unit 70A, the verification unit 72, and the registration unit 74A.

The acquisition unit 70A acquires the identification key Key2, the confirmation information, and the signature V which are outputted from the verification device 14. The acquisition unit 70A also acquires, from the storage device 18, the verification information corresponding to the identification information of the identification target.

When the verification unit 72 succeeds in verifying the legitimacy of the identification key Key2, the registration unit 74A registers verified information indicating that the verification information registered in the storage device 18 has been verified, and confirmation information and the signature V, in the storage device 18. The storage device 18 verifies the legitimacy of the signature V, and when the signature V is legitimate, holds the verified information, the confirmation information, and the signature V in association with the identification information. Furthermore, the registration unit 74A outputs information indicating the verification result by the verification unit 72 to the display device 43.

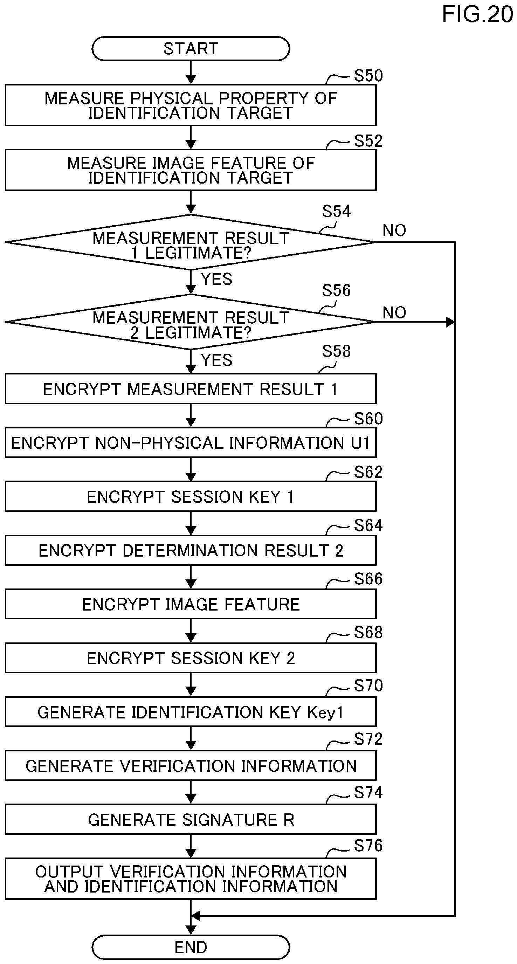

Next, the operation of the individual identification system 10 according to the present embodiment will be described with reference to Figs. 20 to 22. First, registration processing in which the registration device 12 registers verification information will be described with reference to Fig. 20. The registration processing illustrated in Fig. 20 is executed, for example, when an execution instruction is inputted by the sender via the input device 24.

In step S50 of Fig. 20, the measurement unit 50 measures the physical property of the identification target from the input signal P1 inputted from the measurement device 27, similarly to step S10. In step S52, as described earlier, the measurement unit 50A measures the image feature of the identification target from the input signal I1 inputted from the measurement device 27A.

In step S54, similarly to step S12, the determination unit 52 determines whether the measurement result obtained through the processing of step S50 is legitimate. When this determination is an affirmative determination, the processing moves to step S56. In step S56, as described earlier, the determination unit 52A determines whether the measurement result by the processing of step S52 is legitimate. When this determination is an affirmative determination, the processing moves to step S58.

In step S58, the encryption unit 55 generates the session key 1 and encrypts the determination result 1 in step S54 by using the generated session key 1. In step S60, the encryption unit 55 encrypts the non-physical information U1 by using the session key 1. In step S62, the encryption unit 55 encrypts the session key 1 by using the public key of the verification device 14.

In step S64, the encryption unit 55A generates the session key 2 and encrypts the determination result 2 in step S56 by using the generated session key 2. In step S66, the encryption unit 55A encrypts the image feature of the identification target set in the determination unit 52A by using the session key 2. In step S68, the encryption unit 55A encrypts the session key 2 by using the public key of the verification device 14.

In step S70, as described earlier, the generation unit 54C generates the identification key Key1 that is unique to the identification target from the determination result 1C obtained in step S58, the determination result 2C obtained in step S64, and the non-physical information U1. In step S72, the registration unit 56A generates verification information that enables verification of the identification key Key1 from the identification key Key1 generated in step S70, as described earlier. In step S74, the registration unit 56A generates the signature R for the verification information and the identification information by using the private key of the registration device 12.

In step S76, the registration unit 56A outputs, to the storage device 18, the verification information and the identification information that are obtained in step S72, the session key 1A obtained in step S62, the session key 2A obtained in step S68, the non-physical information C obtained in step S60, the image feature C obtained in step S66, and the signature R obtained in step S74. The storage device 18 verifies the legitimacy of the signature R, and when the signature R is legitimate, holds the verification information, the identification information, the session key 1A, the session key 2A, the non-physical information C, the image feature C, and the signature R.

When the processing of step S76 is complete, the registration processing ends. When the determination of step S54 is a negative determination, the processing from step S56 to step S76 is not executed, and the registration processing ends. When the determination of step S56 is a negative determination, the processing from step S58 to step S76 is not executed, and the registration processing ends.

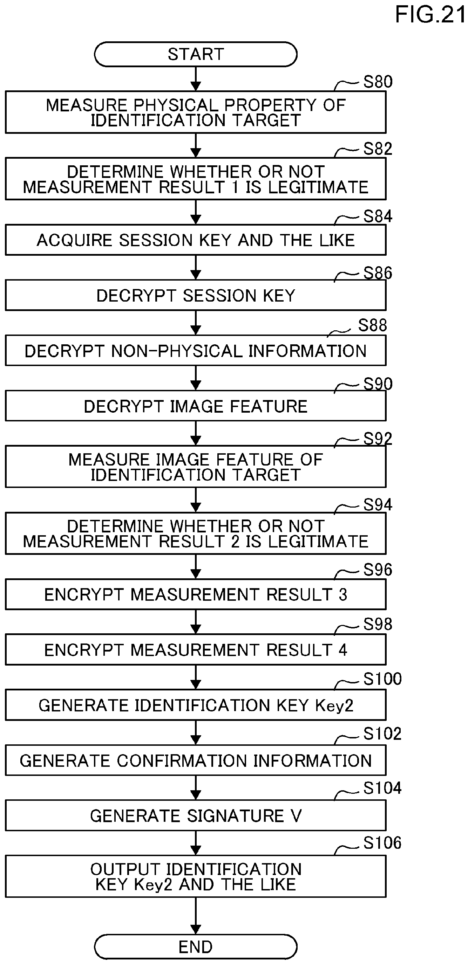

Next, generation processing in which the verification device 14 generates the identification key Key2 will be described with reference to Fig. 21. The generation processing illustrated in Fig. 21 is executed, for example, when an execution instruction is inputted by the purchaser or the delivery party via the input device 34.

In step S80 of Fig. 21, the measurement unit 60 measures the physical property of the identification target from the input signal P2 inputted from the measurement device 37, similarly to step S20. In step S82, similarly to step S22, the determination unit 62 determines whether the measurement result obtained through the processing of step S80 is legitimate.

In step S84, the acquisition unit 67 acquires the session key 1A, the session key 2A, the non-physical information C, and the image feature C that correspond to the identification information of the identification target, from the storage device 18. In step S86, the decryption unit 68 decrypts the session key 1A and the session key 2A that are acquired in step S84 by using the secret key of the verification device 14. In step S88, the decryption unit 68 decrypts the non-physical information C acquired in step S84 by using the session key 1 obtained in step S86.

In step S90, using the session key 2 obtained in step S86, the decryption unit 68 decrypts the image feature C acquired in step S84. In step S92, as described earlier, the measurement unit 60A measures the image feature of the identification target from the input signal I2 inputted from the measurement device 37A. In step S94, as described earlier, the determination unit 62A determines whether the measurement result obtained by the processing of step S92 is legitimate by using the image feature obtained in step S90.

In step S96, the encryption unit 65 encrypts the determination result 3 obtained by the processing of step S82 by using the session key 1 obtained in step S86. In step S98, the encryption unit 65A encrypts the determination result 4 obtained by the processing of step S94 by using the session key 2 obtained in step S86.

In step S100, as described earlier, the generation unit 64B generates the identification key Key2 that is unique to the identification target from the determination result 3C obtained in step S96, the determination result 4C obtained in step S98, and the non-physical information U1 obtained in step S88. In step S102, the generation unit 64B generates confirmation information. In step S104, the generation unit 64B generates the signature V by using the secret key of the verification device 14.

In step S106, the output unit 66A outputs the identification key Key2 generated in step S100, the confirmation information generated in step S102, and the signature V generated in step S104 to the identification device 16. When the processing of step S106 is complete, the generation processing ends.

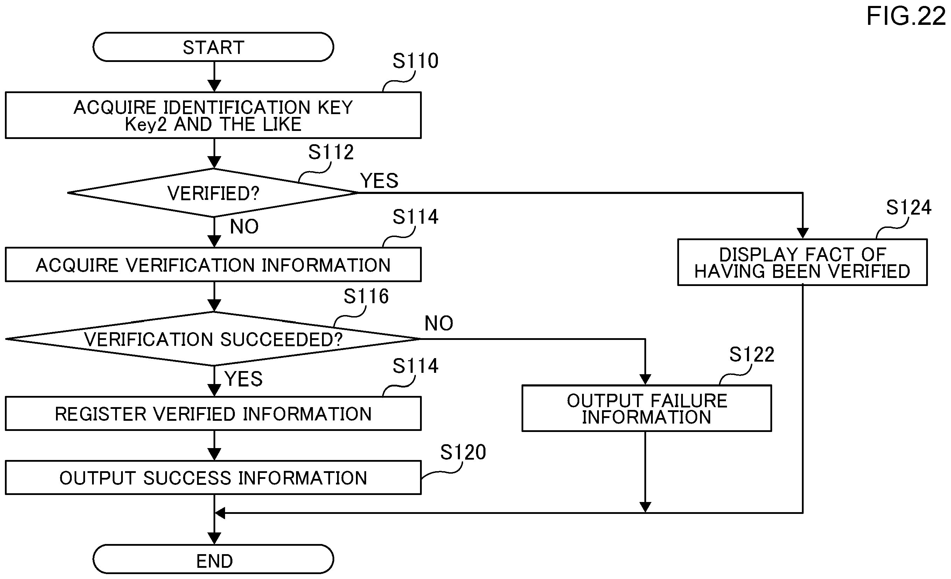

Next, identification processing in which the identification device 16 identifies an identification target will be described with reference to Fig. 22. The identification processing illustrated in Fig. 22 is executed, for example, in a case in which the identification device 16 receives the identification key Key2, the confirmation information, and the signature V that are outputted from the verification device 14 through the processing of step S106 of the generation processing illustrated in Fig. 21.

In step S110, the acquisition unit 70A acquires the identification key Key2, the confirmation information, and the signature V that are outputted from the verification device 14. Similarly to step S32, in step S112, the acquisition unit 70A determines whether the verified information is associated, in the storage device 18, with the verification information corresponding to the identification information of the identification target. When this determination is an affirmative determination, the processing moves to step S124, and when the determination is a negative determination, the processing moves to step S114.

Similarly to step S34, in step S114, the acquisition unit 70A acquires the verification information corresponding to the identification information of the identification target from the storage device 18. Similarly to step S36, in step S116, the verification unit 72 determines whether the hash value of the identification key Key2 acquired in step S110 matches the verification information acquired in step S 114, thereby determining whether the legitimacy of the identification key Key2 has been successfully verified. When this determination is a negative determination, the processing moves to step S122, and in the case of an affirmative determination, the processing moves to step S118.

In step S118, the registration unit 74A registers, in the storage device 18, verified information indicating that the verification information registered in the storage device 18 has been verified, and the confirmation information and the signature V that are acquired in step S 110. The storage device 18 verifies the legitimacy of the signature V, and when the signature V is legitimate, holds the verified information, the confirmation information, and the signature V in association with the identification information. Similarly to step S40, in step S120, the registration unit 74A outputs information indicating that the legitimacy of the identification key Key2 has been successfully verified, to the display device 43. The purchaser is able to ascertain that the identification target is correct by visually recognizing the information displayed on the display device 43. When the processing of step S120 is complete, the identification processing ends.

However, similarly to step S42, in step S122, the registration unit 74A outputs information indicating that the verification of the legitimacy of the identification key Key2 has failed, to the display device 43. The purchaser is able to ascertain that the identification target is counterfeit by visually recognizing the information displayed on the display device 43. When the processing of step S122 is complete, the identification processing ends. Similarly to step S44, in step S124, the registration unit 74A outputs, to the display device 43, information indicating that the identification target has already been verified. When the processing of step S124 is complete, the identification processing ends. Also in the present embodiment, the re-verification can be similarly performed by the processing described in the first embodiment (see, for example, Fig. 9).

As described earlier, according to the present embodiment, the same advantageous effects as those of the first embodiment can be obtained.

Note that, in the first to third embodiments, the image feature of the identification target may be used similarly to the fourth embodiment. In this case, an image feature may be used instead of the physical property of the identification target, or both the physical property and the image feature of the identification target may be used.

In the first to third embodiments, the signatures R and V may be used similarly to the fourth embodiment.

In the fourth embodiment, similarly to the second embodiment, the determination value may be pre-stored in the storage unit 22 of the registration device 12.

Furthermore, in the fourth embodiment, in a case in which the image feature of the identification target can be measured beforehand, the image feature may be reported beforehand by the registration device 12 to the verification device 14.

Furthermore, in the fourth embodiment, in a case in which the verification device 14 is not determined at the time of registration by the registration device 12, encryption using the session key may not be performed at the time of registration, and may be performed after the verification device 14 is determined.

In the fourth embodiment, a case in which the signatures R and V are generated by using a public key encryption system has been described, but the present invention is not limited to this arrangement. The signals R and V may also be generated by using a common key encryption method. In this case, an embodiment in which the storage device 18 functions as a key distribution center is exemplified.

In addition, the session keys 1 to 4 of the fourth embodiment may be fixed for each verification device 14 instead of being changed every time encryption is performed.

In the fourth embodiment, the input signal P1 and the input signal I1 may be one input signal, that is, one input signal that depends on both the physical property and the image feature of the identification target. In this case, the registration device 12 measures the physical properties and the image feature of the identification target from the one input signal. Furthermore, the input signal P2 and the input signal I2 may similarly be one input signal, that is, one input signal that depends on both the physical property and the image feature of the identification target. In this case, the verification device 14 measures the physical property and the image feature of the identification target from the one input signal.

### [Fifth embodiment]

A fifth embodiment of the disclosed technology will now be described. Note that the configuration of the individual identification system 10 (see Fig. 1) and the hardware configurations of the registration device 12, verification device 14, and identification device 16 (see Figs. 2 to 4) are the same as those of the first embodiment, and hence a description thereof is omitted.

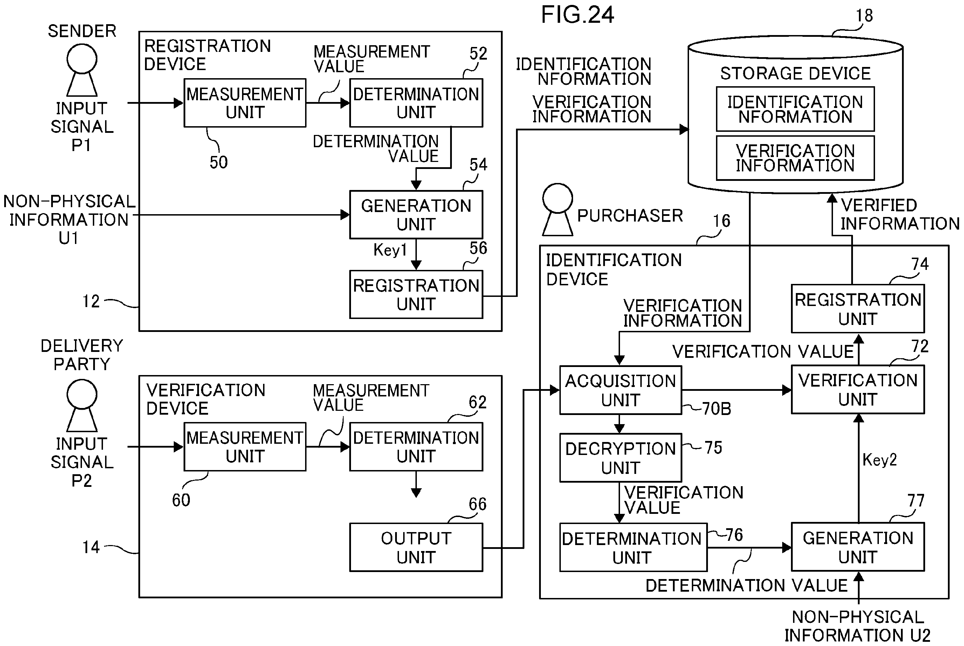

The functional configurations of the verification device 14 and identification device 16 according to this embodiment will be described with reference to Fig. 24. Note that the functional configuration of the registration device 12 is the same as that of the first embodiment, and hence a description thereof is omitted. Functional units having the same functions as those of the first embodiment are assigned the same reference signs, and a description thereof is omitted.

As illustrated in Fig. 24, the verification device 14 includes a measurement unit 60, an encryption unit 65B, and an output unit 66B. By executing the verification program 39, the CPU 30 functions as the measurement unit 60, encryption unit 65B, and output unit 66B.

The encryption unit 65B encrypts the measurement result by the measurement unit 60 according to a predetermined encryption algorithm such as AES. The output unit 66B outputs the measurement result encrypted by the encryption unit 65B to the identification device 16 via the network I/F 35.

As illustrated in Fig. 24, the identification device 16 includes an acquisition unit 70B, a verification unit 72, a registration unit 74, a decryption unit 75, a determination unit 76, and a generation unit 77. By executing the identification program 48, the CPU 40 functions as the acquisition unit 70B, verification unit 72, registration unit 74, decryption unit 75, determination unit 76, and generation unit 77.

The acquisition unit 70B acquires the encrypted measurement result outputted from the verification device 14. The acquisition unit 70B also acquires, from the storage device 18, the verification information corresponding to the identification information of the identification target. The decryption unit 75 decrypts the encrypted measurement result acquired by the acquisition unit 70B. The verification device 14 and the identification device 16 pre-store a common key that is used for the encryption by the encryption unit 65B and the decryption by the decryption unit 75.

Similarly to the determination unit 62, the determination unit 76 determines whether the measurement result obtained through the decryption by the decryption unit 75 is legitimate. Similarly to the generation unit 64, the generation unit 77 generates an identification key Key2 that is unique to the identification target from the determination result by the determination unit 76 and from the non-physical information U2 that does not depend on the physical property of the identification target and that differs for each identification target. The identification key Key2 generated by the generation unit 77 is inputted to the verification unit 72.

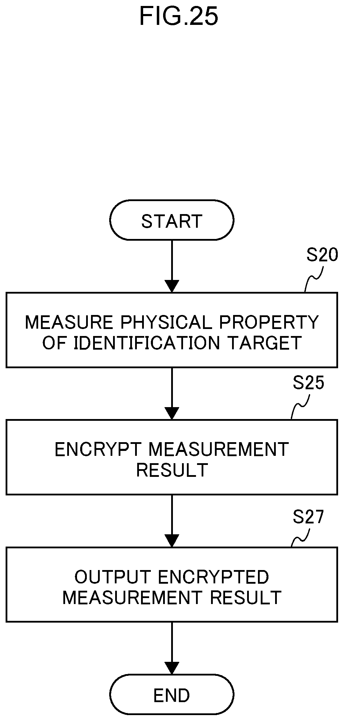

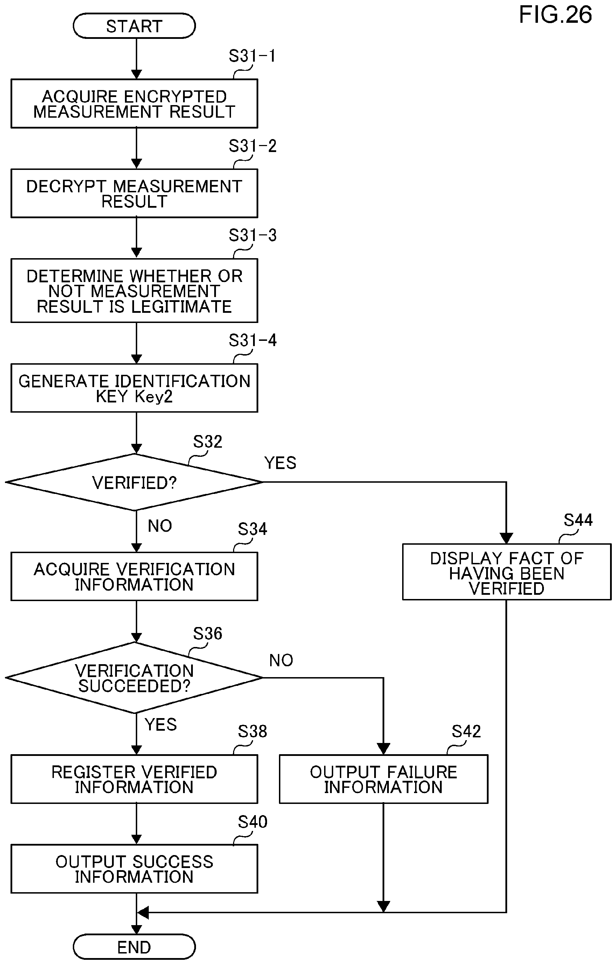

Next, the operation of the individual identification system 10 according to the present embodiment will be described with reference to Figs. 25 and 26. Note that the registration processing executed by the registration device 12 (see Fig. 6) is the same as that of the first embodiment, and hence a description thereof is omitted.

First, output processing in which the verification device 14 outputs the measurement result will be described with reference to Fig. 25. By executing the verification program 39, the CPU 30 of the verification device 14 executes the output processing illustrated in Fig. 25. The output processing is executed, for example, when an execution instruction is inputted by the purchaser or delivery party via the input device 34. Note that steps in Fig. 25 in which the same processing as that in Fig. 7 is executed are assigned the same step numbers, and hence a description thereof is omitted.

In Fig. 25, step S25 is executed after step S20. In step S25, the encryption unit 65B encrypts the measurement result obtained through the processing of step S20 according to a predetermined encryption algorithm. In step S27, the output unit 66B outputs the measurement result encrypted in step S25 to the identification device 16 via the network I/F 35. When the processing of step S27 is complete, the output processing ends.

Next, identification processing in which the identification device 16 identifies an identification target will be described with reference to Fig. 26. By executing the identification program 48, the CPU 40 of the identification device 16 executes the identification processing illustrated in Fig. 26. The identification processing is executed, for example, when the identification device 16 receives the encrypted measurement result outputted from the verification device 14 by the processing of step S27 of the foregoing output processing. Note that steps in Fig. 26 in which the same processing as that in Fig. 8 is executed are assigned the same step numbers, and hence a description thereof is omitted.

In step S31-1 of Fig. 26, the acquisition unit 70B acquires the encrypted measurement result outputted from the verification device 14. In step S31-2, the decryption unit 75 decrypts the encrypted measurement result acquired in step S31-1. In step S31-3, the determination unit 76 determines whether the measurement result obtained through the decryption in step S31-2 is legitimate. In step S31-4, the generation unit 77 generates the identification key Key2 that is unique to the identification target from the determination result obtained by step S31-3, and the non-physical information U2. In step S32 and subsequent steps, the same processing as that of the first embodiment is executed by using the identification key Key2 generated in step S31-4.

As described earlier, the present embodiment affords the same advantageous effects as those of the first embodiment even when, in the first embodiment, the functions of the determination unit 62 and the generation unit 64 of the verification device 14 are transferred to the identification device 16. Furthermore, the functions of the verification device 14 and the identification device 16 according to the fifth embodiment can be realized by an application program of a personal computer or a smartphone, for example. In this case, the application program is managed by the sender, the sender and purchaser share, in advance, the key that is used by the encryption unit 65B and decryption unit 75, and the purchaser sets the key for the application program obtained from the sender.

The verification device 14 is managed by the sender, loaned to the delivery party at the time of shipping the identification target, and returned to the sender after delivery is complete. The sender inspects the returned verification device 14 for evidence of modification and disassembly. The verification device 14 is set up by the sender with a key previously shared with the purchaser at the time of shipping the identification target.

As described above, if the sender and purchaser are legitimate, the delivery party cannot modify or disassemble the verification device 14, even if an attempt is made to analyze same, because the verification device 14 will be inspected by the sender following its return. In addition, the information sent and received between the verification device and the identification device is encrypted with a key shared between the sender and the purchaser, and hence cannot be analyzed by the delivery party. Hence, the delivery party is unable to commit fraud.

In the second to fourth embodiments, functions that correspond to the determination unit 62 and the generation unit 64 of the verification device 14 according to the first embodiment may be transferred to the identification device 16. The image feature of the identification target may also be used in the fifth embodiment as per the fourth embodiment.

### [Sixth embodiment]

A sixth embodiment of the disclosed technology will now be described. Note that the configuration of the individual identification system 10 (see Fig. 1) and the hardware configurations of the registration device 12, verification device 14, and identification device 16 (see Figs. 2 to 4) are the same as those of the first embodiment, and hence a description thereof is omitted.

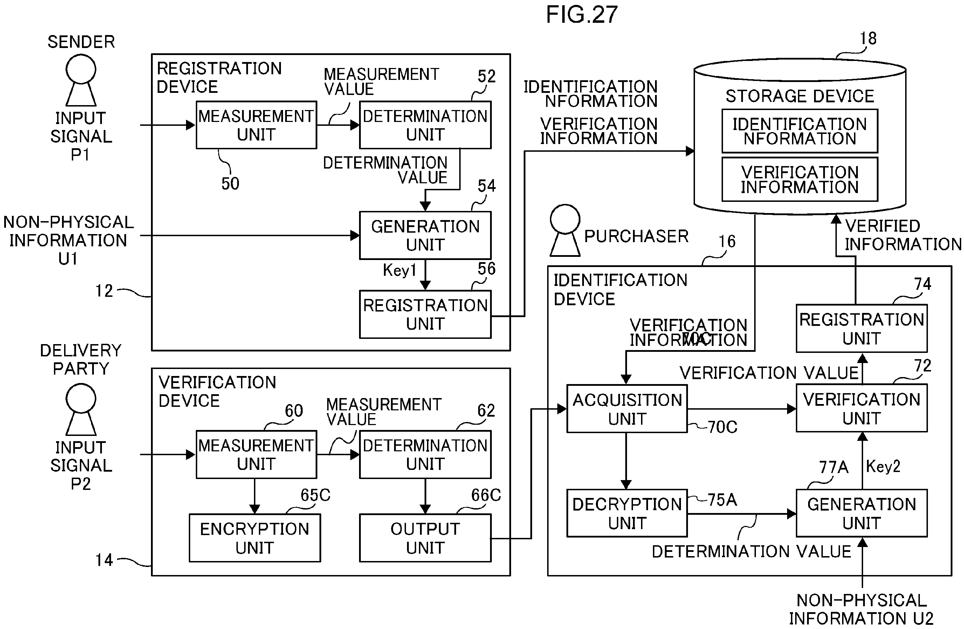

The functional configurations of the verification device 14 and identification device 16 according to this embodiment will be described with reference to Fig. 27. Note that the functional configuration of the registration device 12 is the same as that of the first embodiment, and hence a description thereof is omitted. Functional units having the same functions as those of the first embodiment are assigned the same reference signs, and a description thereof is omitted.

As illustrated in Fig. 27, the verification device 14 includes a measurement unit 60, a determination unit 62, an encryption unit 65C, and an output unit 66C. By executing the verification program 39, the CPU 30 functions as the measurement unit 60, determination unit 62, encryption unit 65C, and output unit 66C.

The encryption unit 65C encrypts the measurement result by the determination unit 62 according to a predetermined encryption algorithm such as AES. The output unit 66C outputs the measurement result encrypted by the encryption unit 65C to the identification device 16 via the network I/F 35.

As illustrated in Fig. 27, the identification device 16 includes an acquisition unit 70C, a verification unit 72, a registration unit 74, a decryption unit 75A, and a generation unit 77A. By executing the identification program 48, the CPU 40 functions as the acquisition unit 70C, verification unit 72, registration unit 74, decryption unit 75A, and generation unit 77A.

The acquisition unit 70C acquires the encrypted determination result outputted from the verification device 14. The acquisition unit 70C also acquires, from the storage device 18, the verification information corresponding to the identification information of the identification target. The decryption unit 75A decrypts the encrypted determination result acquired by the acquisition unit 70C. The verification device 14 and the identification device 16 pre-store a common key that is used for the encryption by the encryption unit 65C and the decryption by the decryption unit 75A.

Similarly to the generation unit 64, the generation unit 77A generates an identification key Key2 that is unique to the identification target from the determination result obtained through the decryption by the decryption unit 75A, and from the non-physical information U2 that does not depend on the physical property of the identification target and that differs for each identification target. The identification key Key2 generated by the generation unit 77A is inputted to the verification unit 72.

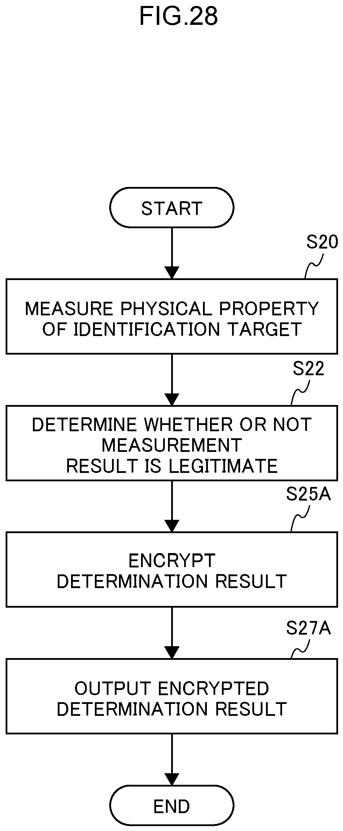

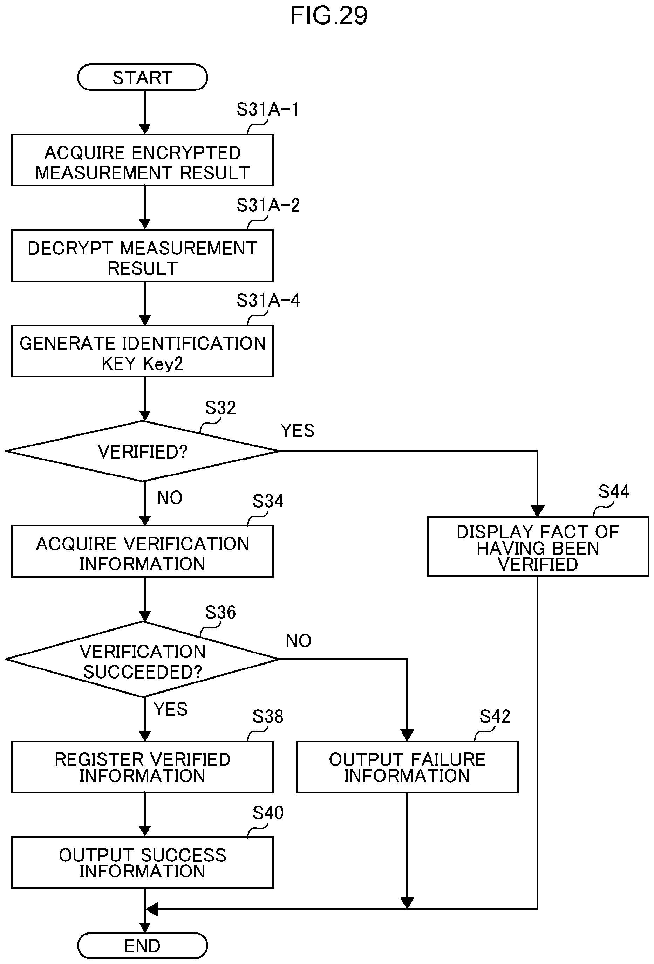

Next, the operation of the individual identification system 10 according to the present embodiment will be described with reference to Fig. 28 and 29. Note that the registration processing executed by the registration device 12 (see Fig. 6) is the same as that of the first embodiment, and hence a description thereof is omitted.

First, output processing in which the verification device 14 outputs the determination result will be described with reference to Fig. 28. By executing the verification program 39, the CPU 30 of the verification device 14 executes the output processing illustrated in Fig. 28. The output processing is executed, for example, when an execution instruction is inputted by the purchaser or delivery party via the input device 34. Note that steps in Fig. 28 in which the same processing as that in Fig. 7 is executed are assigned the same step numbers, and hence a description thereof is omitted.

In Fig. 28, step S25A is executed after step S22. In step S25A, the encryption unit 65C encrypts the measurement result obtained through the processing of step S22 according to a predetermined encryption algorithm such as AES. In step S27A, the output unit 66C outputs the determination result encrypted in step S25A to the identification device 16 via the network I/F 35. When the processing of step S27A is complete, the output processing ends.

Next, identification processing in which the identification device 16 identifies an identification target will be described with reference to Fig. 29. By executing the identification program 48, the CPU 40 of the identification device 16 executes the identification processing illustrated in Fig. 29. The identification processing is executed, for example, when the identification device 16 receives the encrypted determination result outputted from the verification device 14 by the processing of step S27A of the foregoing output processing. Note that steps in Fig. 29 in which the same processing as that in Fig. 8 is executed are assigned the same step numbers, and hence a description thereof is omitted.

In step S31A-1 of Fig. 29, the acquisition unit 70C acquires the encrypted determination result outputted from the verification device 14. In step S31A-2, the decryption unit 75A decrypts the encrypted determination result acquired in step S31A-1. In step S31A-4, the generation unit 77A generates an identification key Key2 that is unique to the identification target from the determination result obtained through the decryption in step S31A-2 and from the non-physical information U2 that does not depend on the physical property of the identification target and that differs for each identification target. In step S32 and subsequent steps, the same processing as that of the first embodiment is executed by using the identification key Key2 generated in step S31A-4.

As described earlier, the present embodiment affords the same advantageous effects as those of the first embodiment even when, in the first embodiment, the functions of the generation unit 64 of the verification device 14 are transferred to the identification device 16.

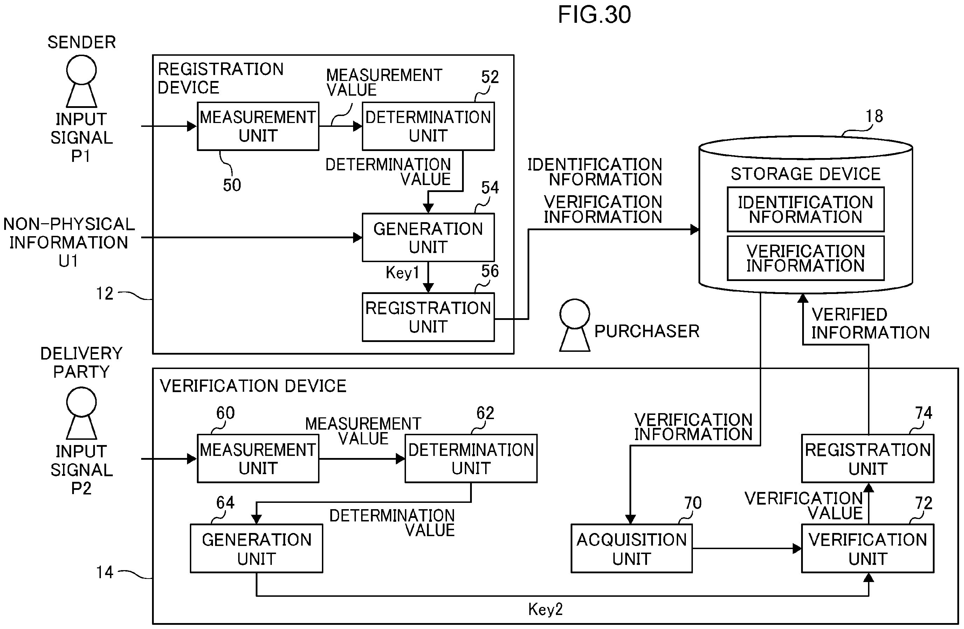

Note that, although cases are described in the fifth and sixth embodiments in which some of the functions of the verification device 14 according to the first embodiment are transferred to the identification device 16, the functions of the verification device 14 and the identification device 16 may also be realized by one device, as illustrated in Fig. 30, for example. Furthermore, in the example of Fig. 30, when the image feature of the identification target is to be used, the measurement device 37 can also be integrated by applying an optical camera that is installed in a personal computer or a smartphone as the measurement device 37.

In each of the foregoing embodiments, a case in which diamond is applied as the identification target has been described, but the present invention is not limited to diamond. For example, a solid other than a diamond may also be applied as the identification target. For example, a bag-packed powder such as fused silica and alumina may be applied as the identification target. In this case, examples of a physical quantity that depends on the physical property of the identification target include the particle size distribution of the powder, and examples of the image feature of the identification target include the color of the powder.

For example, a liquid containing ions of a specific substance may be applied as the identification target. In this case, an example of a physical quantity that depends on the physical property of the identification target includes an ion concentration. For example, a liquid containing a specific substance may be applied as the identification target. In this case, examples of a physical quantity that depends on the physical property of the identification target include the concentration of the specific substance in the gas.

Furthermore, in each of the foregoing embodiments, in a case in which there are a plurality of bases, such as a warehouse and a delivery center, through which the identification target passes between the sender and the purchaser, information indicating the number of times legitimacy is verified each time may be applied as the number of verifications of the non-physical information items U1 and U2. In this case, for example, the non-physical information items U1 and U2 used in the verification of the identification target at the first base include the number of verifications indicating the first time, and the non-physical information items U1 and U2 used in the verification of the identification target at the second base include the number of verifications indicating the second time. Here, because the identification key and the verification information thereof are different at each base through which the identification target passes between the sender and the purchaser, the identification target can be independently verified.

As a specific example, a first delivery party delivers the identification target product from the sender to the port, station, or airport, a second delivery party delivers the product from that port, station, or airport to the destination port, station, or airport, a third delivery party delivers the product from the destination port, station, or airport to a collection-delivery station, and a fourth delivery party delivers the product from the collection-delivery station to the purchaser. In this case, and when it is determined that the product delivered to the purchaser is not an authentic product, it is possible to specify at which stage the product was switched as follows:

The sender generates a first non-physical information item with the count set to 1 and sends the first non-physical information item to the second delivery party. The sender sends, to the third delivery party, a second non-physical information item with the count set to 2 and the random number also changed, and sends, to the fourth delivery party, a third non-physical information item with the count set to 3 and the random number also changed. Finally, the sender sends, to the purchaser, a fourth non-physical information item with the count set to 4 and the random number also changed.

Upon receiving a product from the first delivery party, the second delivery party uses the first non-physical information item to verify the product, and sends the verification result to the first delivery party or the sender. Upon receiving the product from the second delivery party, the third delivery party uses the second non-physical information item to verify the product, and sends the verification result to the second delivery party or the sender. Upon receiving the product from the third delivery party, the fourth delivery party uses the third non-physical information item to verify the product, and sends the verification result to the third delivery party or the sender. Upon receiving the product from the fourth delivery party, the purchaser uses the fourth non-physical information item to verify the product, and sends the verification result to the fourth delivery party or the sender.

Here, in a case where the product is switched en route, because the delivery party or purchaser who was to receive the product knows the verification result, which is verified as fraudulent, at the stage immediately after the switch, the delivery party or purchaser does not receive the product and contacts the sender. Although an example is illustrated here in which each delivery party verifies the product and delivers the product to the next delivery party or to the purchaser, product verification is performed each time the product is received also in a case where, for example, the first recipient receives the product from the first delivery party and where the second delivery party receives the product from the first recipient and delivers the product. In this case, it is assumed that the first non-physical information item is sent to the first recipient and a new non-physical information item with a modified count and random number is sent to the second delivery party. Accordingly, the product is verified at each stage the product is distributed, and hence if the product is switched, it is possible to specify at which stage the product was switched.

Next, a case will be considered where the first purchaser resells the product to a second purchaser while demonstrating the authenticity of the product. In this case, irrespective of the authenticity of the product, the first purchaser is able to counterfeit the verification device that outputs the identification key Key2 or authenticity information that the product is legitimate, which corresponds to the non-physical information held by the first purchaser. In order to prevent the foregoing, the second purchaser receiving the resold product from the first purchaser asks the sender to issue a new non-physical information item, and uses the new non-physical information item issued by the sender to verify the product. In this case, since the first purchaser is unable to generate an identification key Key2 that corresponds to the new non-physical information item, the second purchaser is able to ascertain that the product received from the first purchaser is not a genuine product. Thus, the first purchaser is unable to resell a counterfeit version of the product. The sender is also able to ascertain how their own products are being resold.

In an example where a product passes through a plurality of bases, adding additional information for each base as non-physical information may be considered. Examples of the additional information include information such as a reception date and time, a re-shipment date and time at each base, a management temperature at the base, or the like. In this case, the non-physical information is different including the number of verifications. In contrast, for example, the following four countermeasures are conceivable.

As a first countermeasure, in a case in which each base has a registration device, it is conceivable to perform the registration processing illustrated in the first to fourth embodiments by using, as new non-physical information, information that is obtained by concatenating additional non-physical information in order, starting with initial non-physical information, and to newly register the verification information of an identification key Keyl' that is obtained by the registration processing, in a recording device. At the time of verification, verification is performed similarly to the first to fourth embodiments on the assumption that the new non-physical information is encrypted using a key that is shared with the next reception destination and stored in the storage device or directly sent to the next reception destination. This verification can be handled when there is no non-physical information for each number of verifications as described earlier, and the load on the sender is the smallest.

As a second countermeasure, in a case in which non-physical information having the number of verifications allocated to the bases is used, verification information of the identification key Keyl' is generated and recorded as new non-physical information that is obtained by concatenating the non-physical information and the additional information for each base, similarly to the first countermeasure, and verification is performed. Thus, the processing at each base can be made efficient.

As a third countermeasure, in a case in which each base does not have a registration device, an output using a one-way function such as a hash value for non-physical information to be added is calculated, an exclusive OR, from the output and an identification key Key1 generated using non-physical information including the number of verifications of the base, is taken as a new identification key Key1', and the verification information is registered in the storage device. At the time of verification, first, an identification key Key2 is generated using the previous non-physical information having the number of verifications of the base, and the result of taking the exclusive OR and the hash value for the additional non-physical information is verified as the identification key Key2'.

As a fourth countermeasure, in a case in which there is no verification count in the non-physical information, a hash value obtained by concatenating non-physical information from initial non-physical information to additional non-physical information is generated, and verification information for the result of taking the identification key Key1 generated using the initial non-physical information, and the exclusive OR, is registered as a new identification key Key1', and an identification key Key2', which is generated by using non-physical information that has been encrypted and registered during verification, or that is used during registration and sent to the next reception destination, is inspected.

Alternatively, rather than an exclusive OR, a hash value may be generated by concatenating, with the additional non-physical information, an identification key Key2 that was inspected at the time of reception, and a value using a one-way function generated from information that includes the inspected identification key Key2 and the additional non-physical information may also be used as the new identification key Key1'.

Moreover, in each of the foregoing embodiments, various processing, which is executed as a result of the CPU executing software (a program), may be executed by various processors other than the CPU. Examples of the processor in this case include a PLD in which the circuit configuration can be changed after manufacturing, such as an FPGA, and a dedicated electric circuit which is a processor having a circuit configuration exclusively designed to execute specific processing such as an application specific integrated circuit (ASIC). Various processing may be executed by one of these various processors, or may be executed by a combination of two or more processors of the same type or different types (for example, a plurality of FPGAs, a combination of a CPU and an FPGA, and so forth). More specifically, the hardware structure of these various processors is, more specifically, an electric circuit in which circuit elements such as semiconductor elements are combined.

In the third and fourth embodiments, various processing executed by the processors 20A, 20B, 30A, and 30B may be executed due to the CPU executing software (a program).

In each of the foregoing embodiments, an aspect in which the registration program 29 is pre-stored (-installed) in the storage unit 22 has been described, but the present invention is not limited to this arrangement. The registration program 29 may be provided in a form recorded on a recording medium such as a compact disc read only memory (CD-ROM), a digital versatile disc read only memory (DVD-ROM), or a universal serial bus (USB) memory. The registration program 29 may also be downloaded from an external device via a network.

Furthermore, in each of the foregoing embodiments, an aspect in which the verification program 39 is pre-stored (-installed) in the storage unit 32 has been described, but the present invention is not limited to this arrangement. The verification program 39 may be provided in the form of being recorded on a recording medium such as a CD-ROM, a DVD-ROM, or a USB memory. The verification program 39 may also be downloaded from an external device via a network.

In each of the foregoing embodiments, an aspect in which the identification program 48 is pre-stored (pre-installed) in the storage unit 42 has been described, but the present invention is not limited to this arrangement. The identification program 48 may also be provided in the form of being recorded on a recording medium such as a CD-ROM, a DVD-ROM, or a USB memory. The identification program 48 may also be downloaded from an external device via a network.

The disclosure of Japanese Patent Application No. 2020-009468, filed on January 23, 2020, is incorporated herein by reference in its entirety. All documents, patent applications, and technical standards disclosed in the present specification are incorporated herein by reference to the same extent as if the individual documents, patent applications, and technical standards were specifically and individually marked as being incorporated by reference.

## Claims

1. A registration device of an individual identification system that includes the registration device and a verification device, and that identifies an individual identification target, the registration device comprising:
a registration unit that outputs verification information enabling verification of an identification key that is unique to the identification target, by using, as inputs, an input signal that depends on at least one of a physical property and an image feature of the identification target, and non-physical information that does not depend on the physical property and that differs for each identification target.

2. A verification device of an individual identification system that includes a registration device, the verification device, and an identification device and that identifies an individual identification target, the verification device comprising:
an output unit that outputs an identification key that is unique to the identification target by using, as inputs, an input signal that depends on at least one of a physical property and an image feature of the identification target, and non-physical information that does not depend on the physical property and that differs for each identification target.

3. An identification device of an individual identification system that includes a registration device, a verification device, and the identification device and that identifies an individual identification target, the identification device comprising:
a verification unit that verifies the legitimacy of the identification key outputted by the verification device by using the verification information outputted by the registration device according to claim 1 and the identification key outputted by the verification device according to claim 2.

4. The registration device according to claim 1, further comprising:
a measurement unit that measures at least one of the physical property and the image feature from the input signal;
a determination unit that determines whether the measurement result by the measurement unit is legitimate; and
a generation unit that generates the identification key from the determination result by the determination unit and at least a portion of the non-physical information,
wherein the registration unit generates the verification information from the identification key.

5. The verification device according to claim 2, further comprising:
a measurement unit that measures at least one of the physical property and the image feature from the input signal;
a determination unit that determines whether the measurement result by the measurement unit is legitimate; and
a generation unit that generates the identification key from the determination result by the determination unit and at least a portion of the non-physical information.

6. The registration device according to claim 1, further comprising:
a generation unit that generates the identification key from a preset determination value indicating that at least one of the physical property and the image feature is legitimate, and from at least a portion of the non-physical information,
wherein the registration unit generates the verification information from the identification key.

7. The verification device according to claim 5,
wherein the generation unit generates the identification key by using a predetermined key to encrypt a value including the determination result by the determination unit.

8. An individual identification system, comprising:
the registration device according to claim 1;
the verification device according to claim 2; and
the identification device according to claim 3.

9. The individual identification system according to claim 8,
wherein the registration unit of the registration device registers, in a storage device, identification information for specifying the verification information of the identification target, and the verification information, and
wherein the identification device further includes a registration unit that, when the verification of the identification target has succeeded, registers, in the storage device, information indicating that the verification information registered in the storage device has been verified.

10. The individual identification system according to claim 9,
wherein the storage device is a blockchain.

11. The individual identification system according to any one of claims 8 to 10, further comprising:
a generation unit that generates information for authenticating at least one of the registration device and the verification device.

12. The individual identification system according to any one of claims 8 to 11,
wherein the registration device further includes an encryption unit that encrypts target information by using a different key for each of the verification devices, and
wherein the verification device further includes a decryption unit that decrypts the information encrypted by the encryption unit.

13. An individual identification system, including:
a measurement unit that measures at least one of a physical property and an image feature from an input signal that depends on at least one of the physical property and the image feature of an identification target;
a determination unit that determines whether the measurement result by the measurement unit is legitimate;
a generation unit that generates an identification key that is unique to the identification target from the determination result by the determination unit and from at least a portion of non-physical information that does not depend on the physical property and that differs for each identification target; and
a verification unit that verifies the legitimacy of the identification key by using the verification information outputted by the registration device according to claim 1 and the identification key generated by the generation unit.

14. The individual identification system according to claim 13, including:
a verification device and an identification device,
wherein the measurement unit is provided to the verification device,
wherein the determination unit, the generation unit, and the verification unit are provided to the identification device,
wherein the verification device is further equipped with an encryption unit that encrypts the measurement result by the measurement unit, and
wherein the identification device is further equipped with a decryption unit that decrypts the measurement result encrypted by the encryption unit.

15. The individual identification system according to claim 13, including:
a verification device and an identification device,
wherein the measurement unit and the determination unit are provided to the verification device,
wherein the generation unit and the verification unit are provided to the identification device,
wherein the verification device is further equipped with an encryption unit that encrypts the determination result by the determination unit, and
wherein the identification device is further equipped with a decryption unit that decrypts the determination result encrypted by the encryption unit.

16. The individual identification system according to claim 13, including:
a verification device,
wherein the measurement unit, the determination unit, the generation unit, and the verification unit are provided to the verification device.
